(19) **Europäisches Patentamt / European Patent Office / Office européen des brevets**

(11) **EP 4 733 459 A1**

(12) **EUROPEAN PATENT APPLICATION**

(43) Date of publication:
29.04.2026  Bulletin 2026/18

(21) Application number: 25209955.1

(22) Date of filing: 21.10.2025

(51) International Patent Classification (IPC):
$D04H\ 1/4291^{(2012.01)}$    $D04H\ 1/541^{(2012.01)}$
$D04H\ 1/732^{(2012.01)}$    $B01D\ 69/10^{(2006.01)}$
$H01M\ 50/44^{(2021.01)}$

(52) Cooperative Patent Classification (CPC):
D04H 1/4291; D04H 1/541; D04H 1/5412;
D04H 1/5416; D04H 1/732; H01M 50/417;
H01M 50/44; H01M 50/489; H01M 50/491;
H01M 50/494; B01D 67/00042; B01D 69/1071;
B01D 71/26; B01D 71/261; B01D 2325/02;   (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 22.10.2024  JP 2024185858
11.06.2025  JP 2025098088
09.09.2025  JP 2025149509

(71) Applicant: **Japan Vilene Company, Ltd.**
**Tokyo 104-8423 (JP)**

(72) Inventors:
• **KAWANO, Akihiko**
**Ibaraki, 306-0213 (JP)**
• **MURATA, Shuichi**
**Ibaraki, 306-0213 (JP)**
• **SAWADA, Shunichi**
**Ibaraki, 306-0213 (JP)**
• **TANAKA, Masanao**
**Ibaraki, 306-0213 (JP)**

(74) Representative: **Cohausz & Florack**
**Patent- & Rechtsanwälte**
**Partnerschaftsgesellschaft mbB**
**Bleichstraße 14**
**40211 Düsseldorf (DE)**

(54) **NONWOVEN FABRIC AND SEPARATOR FOR ELECTROCHEMICAL ELEMENT AND MEMBRANE SUPPORT**

(57)    Provided is a versatile nonwoven fabric having excellent heat resistance and mechanical strength and applicable to applications requiring heat resistance; or a nonwoven fabric having excellent heat resistance, mechanical strength, and permeability. Moreover, provided is a separator for electrochemical elements having excellent heat resistance and mechanical strength. Furthermore, provided is a membrane support having excellent heat resistance, mechanical strength, and ion permeability.

The nonwoven fabric of the present invention comprises a polymethylpentene component and a polyethylene component, wherein the polyethylene component is fused, and wherein the polymethylpentene component accounts for 30% by volume or more of the total fibers constituting the nonwoven fabric, and the polyethylene component accounts for 30% by volume or more of the total fibers constituting the nonwoven fabric. The separator for electrochemical elements of the present invention comprises the nonwoven fabric. Another nonwoven fabric of the present invention comprises core-sheath composite fibers having a polyethylene component as a sheath component and a polymethylpentene component as a core component, wherein the polyethylene compo-
nent as the sheath component of the core-sheath composite fiber is fused, wherein the polymethylpentene component accounts for 30% by volume or more of the total fibers constituting the nonwoven fabric, and the polyethylene component accounts for 30% by volume or more of the total fibers constituting the nonwoven fabric, wherein a thickness of the nonwoven fabric is 100 μm or less, and the nonwoven fabric has a direction with a tensile strength per mass per unit area of 2.0 N/5 cm-width or more, or wherein a ratio (L/D) of a fiber diameter (D, unit: μm) to a length (L, unit: μm) of the core-sheath composite fiber is 350 or more. The membrane support of the present invention comprises the other nonwoven fabric.

[Figure 5]

(Cont. next page)

(52) Cooperative Patent Classification (CPC): (Cont.)
B01D 2325/24

# EP 4 733 459 A1

## Description

### TECHNICAL FIELD

The present invention relates to nonwoven fabrics. Since the nonwoven fabric of the present invention exhibits excellent heat resistance and mechanical strength, it is suitable for use as applications requiring these properties, such as a separator for electrochemical elements, a separator support for batteries, and a separator support for water electrolysis.

Furthermore, since the nonwoven fabric of the present invention exhibits not only excellent heat resistance, but also excellent mechanical strength despite its thinness, and excellent permeability, it is suitable for use as applications requiring these properties, such as a separator support for batteries, a separator support for water electrolysis, and a separator for electrochemical elements.

### BACKGROUND ART

Unlike woven or knitted fabrics, nonwoven fabrics can have fibers randomly oriented, enabling them to possess various properties, such as dust removal properties, liquid retention, wipe properties, concealment properties, flexibility, separation properties, isolation properties, and strength imparting properties. Consequently, they are applied in a wide range of uses. However, depending on the fibers constituting the nonwoven fabric, there were cases where insufficient heat resistance or mechanical strength rendered it unsuitable for applications requiring heat resistance.

For example, utilizing the liquid retention and isolation properties of nonwoven fabrics, they are used as separators to isolate the electrodes in nickel-metal hydride batteries. In recent years, nickel-metal hydride batteries have increasingly been installed in automobiles as power sources and as backup power supplies for systems such as T-BOX, GPS, and T-CONNECT. However, due to insufficient heat resistance or mechanical strength of the non-woven fabric, it has sometimes been impossible to provide reliable nickel-metal hydride batteries over extended periods.

As a nonwoven fabric capable of solving such heat resistance problems, a nonwoven fabric (a separator) utilizing polyolefin-based dividable composite fibers combining polymethylpentene, a highly heat-resistant polyolefin resin, and polypropylene has been proposed (Patent literature 1).

However, even such nonwoven fabrics utilizing polyolefin-based dividable composite fibers combining polymethylpentene and polypropylene did not possess sufficient heat resistance and mechanical strength.

These problems of heat resistance and mechanical strength were not limited to the separator for nickel-metal hydride batteries as mentioned above, and they were equally problematic even when nonwoven fabrics were used as a separator support for batteries or a separator support for water electrolysis.

For example, utilizing the strength-enhancing properties of nonwoven fabric, it is used as a support for the separator that isolates the electrodes in nickel-zinc batteries. Since nickel-zinc batteries are prone to short circuits caused by dendrites, resin films are often used as separators. However, due to the insufficient mechanical strength of resin films, nonwoven fabrics are utilized as the support (Patent Literature 2). Such separators composed of resin films are formed by filling the voids of nonwoven fabric with a resin solution and then film-forming the nonwoven fabric by volatilizing and removing the solvent from the resin solution. However, since nonwoven-fabric-constituting resins used as the conventional support was polyolefin-based resin such as polyethylene or polypropylene, it tended to shrink due to the heat during volatilization and removal or the heat during use, and thus could not impart strength as a support, and exhibited poor heat resistance.

On the other hand, a polyphenylene sulfide resin is also known as nonwoven fabric constituent resins that are support materials with excellent heat resistance. To construct a nonwoven fabric support using polyphenylene sulfide fibers, adhesive fibers are required to fix the polyphenylene sulfide fibers. However, adhesive fibers made from polyolefin-based fibers exhibit poor heat resistance. To perform plastic fixation with undrawn polyphenylene sulfide fibers having excellent heat resistance, heating and pressure application are necessary. This process reduces the voids in the support, resulting in poor ion permeability.

As a nonwoven fabric capable of solving such heat resistance problems, a nonwoven fabric (separator) utilizing polyolefin-based dividable composite fibers combining polymethylpentene, a highly heat-resistant polyolefin resin, and polypropylene has been proposed (Patent literature 1).

However, even such nonwoven fabrics utilizing polyolefin-based dividable composite fibers combining polymethylpentene and polypropylene did not possess sufficient heat resistance, mechanical strength, and permeability (ion permeability).

These problems of heat resistance, mechanical strength, and permeability were not limited to the separator support for batteries as mentioned above, and they were equally problematic even when nonwoven fabrics were used as a separator support for electrolysis or a separator for electrochemical elements.

### CITATION LIST

PATENT LITERATURE

[PATENT LITERATURE 1] JP 2021-161563 A
[PATENT LITERATURE 2] JP 2019-179678 A

SUMMARY OF INVENTION

TECHNICAL PROBLEM

The present invention was made to solve the aforementioned conventional problems, and an object is to provide a versatile nonwoven fabric having excellent heat resistance and mechanical strength and applicable to applications requiring heat resistance. Furthermore, another object is to provide a separator for electrochemical elements having excellent heat resistance and mechanical strength.

Furthermore, an object is to provide a nonwoven fabric having excellent heat resistance, mechanical strength, and permeability. Furthermore, another object is to provide a membrane support having excellent heat resistance, mechanical strength, and ion permeability.

SOLUTION TO PROBLEM

The nonwoven fabric of the present invention contains the polymethylpentene component and the polyethylene component, the polyethylene component is fused, the polymethylpentene component accounts for 30% by volume or more of total fibers constituting the nonwoven fabric, and the polyethylene component accounts for 30% by volume or more of the total fibers constituting the nonwoven fabric.

It is preferable that core-sheath composite fibers comprising the polyethylene component as the sheath component and the polymethylpentene component as the core component are contained as the fibers constituting the nonwoven fabric. Furthermore, it is preferable to further contain ultrafine fibers with a fiber diameter of 4.5 $\mu$m or less as the fibers constituting the nonwoven fabric.

It is preferable that the nonwoven fabric has a direction with a tensile strength per mass per unit area of 2.5 N/5 cm-width or more. Furthermore, it is preferable that the porosity of the nonwoven fabric is 50-80%. Furthermore, it is preferable that the nonwoven fabric has a liquid retention rate of 5% or more after being pressurized at 5.7 MPa.

The separator for electrochemical elements of the present invention contains the aforementioned nonwoven fabric.

The present invention also relates to "(1) a nonwoven fabric comprising a polymethylpentene component and a polyethylene component, the polyethylene component being fused, wherein the polymethylpentene component accounts for 30% by volume or more of total fibers constituting the nonwoven fabric, and the polyethylene component accounts for 30% by volume or more of the total fibers constituting the nonwoven fabric, wherein a thickness of the nonwoven fabric is 100 $\mu$m or less, and it has a direction with a tensile strength per mass per unit area of 2.0 N/5 cm-width or more."

It is preferable that the present invention is "(2) the nonwoven fabric of (1), comprising core-sheath composite fibers comprising the polyethylene component as the sheath component and the polymethylpentene component as the core component as the fibers constituting the nonwoven fabric."

It is preferable that the present invention is "(3) the nonwoven fabric of (2), wherein a ratio (L/D) of a fiber diameter (D, unit: $\mu$m) to a length (L, unit: $\mu$m) of the core-sheath composite fiber is 350 or more."

It is preferable that the present invention is "(4) the nonwoven fabric of (1) to (3), wherein a porosity is 60% or more."

It is preferable that the present invention is "(5) the nonwoven fabric of (1) to (4), wherein a mass per unit area is 20 g/m$^2$ or less."

Another nonwoven fabric of the present invention relates to "(6) a nonwoven fabric comprising core-sheath composite fibers comprising a polyethylene component as the sheath component and a polymethylpentene component as the core component, the polyethylene component as the sheath component of the core-sheath composite fibers being fused, wherein the polymethylpentene component accounts for 30% by volume or more of total fibers constituting the nonwoven fabric, and the polyethylene component accounts for 30% by volume or more of the total fibers constituting the nonwoven fabric, wherein a thickness of the nonwoven fabric is 100 $\mu$m or less, and a ratio (L/D) of a fiber diameter (D, unit: $\mu$m) to a length (L, unit: $\mu$m) of the core-sheath composite fiber is 350 or more."

It is preferable that the present invention is "(7) the nonwoven fabric of (6), having a direction with a tensile strength per mass per unit area of 2.0 N/5 cm-width or more."

It is preferable that the present invention is "(8) the nonwoven fabric of (6) or (7), wherein a porosity is 60% or more."

It is preferable that the present invention is "(9) the nonwoven fabric of (6) to (8), wherein a mass per unit area is 20 g/m$^2$ or less."

It is "(10) a membrane support, comprising the nonwoven fabric of any one of (1) to (9)."

ADVANTAGEOUS EFFECTS OF INVENTION

Since the polymethylpentene component accounts for 30% by volume or more of total fibers constituting the nonwoven fabric, the nonwoven fabric of the present invention exhibits excellent heat resistance. Furthermore, since the polyethylene component accounts for 30% by volume or more of the total fibers constituting the nonwoven fabric, and the polyethylene component is fused, the nonwoven fabric of the present invention exhibits excellent mechanical strength. Therefore, it is a versatile nonwoven fabric applicable to applications requiring heat resistance.

When the nonwoven fabric contains the core-sheath composite fibers comprising the polyethylene component as the sheath component and the polymethylpentene component as the core component as the fibers constituting the nonwoven fabric, even when containing a large amount of polyethylene components with relatively low melting points and poor heat resistance, it exhibits excellent heat resistance because the polymethylpentene component is the core component.

When further containing the ultrafine fibers with a fiber diameter of 4.5 $\mu$m or less as the fibers constituting the nonwoven fabric, it may be a nonwoven fabric having fine pores, and exhibits excellent retention properties for liquids due to the large surface area of the constituent fibers of the nonwoven fabrics.

When the nonwoven fabrics has a direction with a tensile strength per mass per unit area of 2.5 N/5 cm-width or more, it exhibits excellent mechanical strength.

When the porosity of the nonwoven fabric is 50-80%, the amount of liquid retention is high because there is ample space to retain liquid.

When the liquid retention rate after the nonwoven fabric is pressurized at 5.7 MPa is 5% or more, since it can retain liquid even when pressure is applied, it has strong liquid retention capacity.

Since the separator for electrochemical elements of the present invention contains the aforementioned non-woven fabric, it exhibits both excellent heat resistance and mechanical strength. Therefore, by using the separator for electrochemical elements of the present invention, electrochemical elements that are suitable for use in automotive applications requiring heat resistance can be produced.

Since the polymethylpentene component accounts for 30% by volume or more of the total fibers constituting the nonwoven fabric, the nonwoven fabric of the present invention exhibits excellent heat resistance. Furthermore, since the polyethylene component accounts for 30% by volume or more of the total fibers constituting the nonwoven fabric, the polyethylene component is fused, and it has a direction with a tensile strength per mass per unit area of 2.0 N/5 cm-width or more, the nonwoven fabric of the present invention exhibits excellent mechanical strength. Furthermore, since the thickness is thin, with a thickness of 100 $\mu$m or less, it is a nonwoven fabric exhibiting excellent permeability.

When the nonwoven fabric contains the core-sheath composite fibers comprising the polyethylene component as the sheath component and the polymethylpentene component as the core component as the fibers constituting the nonwoven fabric, even when containing a large amount of polyethylene components with relatively low melting points and poor heat resistance, it exhibits excellent heat resistance because the polymethylpentene component is the core component.

When the ratio (L/D) of the fiber diameter (D, unit: $\mu$m) to the length (L, unit: $\mu$m) in the core-sheath composite fiber is 350 or more, since the fiber length is longer compared to the fiber diameter, the core-sheath composite fibers tend to tangle easily with the fibers constituting the nonwoven fabric, and further, when the fiber content is the same, due to the low number of fibers and the few points where fibers connect, the tensile strength is high. Therefore, the nonwoven fabric exhibits excellent mechanical strength.

When the porosity of the nonwoven fabric is 60% or more, due to high porosity, the nonwoven fabric exhibits excellent permeability, for example, excellent ion permeability or fluid permeability.

When the mass per unit area of the nonwoven fabric is 20 g/m$^2$ or less, due to low fiber content, the nonwoven fabric exhibits excellent permeability, for example, excellent ion permeability or fluid permeability.

Since the polymethylpentene component accounts for 30% by volume or more of total fibers constituting the nonwoven fabric, another nonwoven fabric of the present invention exhibits excellent heat resistance. Furthermore, because the polyethylene component accounts for 30% by volume or more of the total fibers constituting the nonwoven fabric; the polyethylene component is fused; and when the ratio (L/D) of the core-sheath composite fibers is 350 or more, since the fiber length is longer compared to the fiber diameter, the core-sheath composite fibers tend to tangle easily with the fibers constituting the nonwoven fabric; and further, when the fiber content is the same, due to the low number of fibers and the few points where fibers connect, the tensile strength is high; and therefore, the nonwoven fabric exhibits excellent mechanical strength. Furthermore, this nonwoven fabric exhibits excellent permeability, because its thickness is thin, with a thickness of 100 μm or less.

When this nonwoven fabric has a direction with a tensile strength per mass per unit area of 2.0 N/5 cm-width or more, it exhibits excellent mechanical strength.

When the porosity of this nonwoven fabric is 60% or more, due to high porosity, it exhibits excellent permeability, for example, excellent ion permeability or fluid permeability.

When the mass per unit area of this nonwoven fabric is 20 g/m$^2$ or less, due to low fiber content, it exhibits excellent permeability, for example, excellent ion permeability or fluid permeability.

Since the membrane support of the present invention contains the aforementioned nonwoven fabric, it exhibits excellent heat resistance, mechanical strength, and permeability. Therefore, by using the membrane support of the present invention, membranes with excellent heat resistance, mechanical strength, and permeability can be produced. For example, by using it as a separator support for batteries or a separator support for electrolysis, separators with excellent heat resistance, mechanical strength, and ion permeability can be produced.

BRIEF DESCRIPTION OF THE DRAWINGS

FIG. 1 shows a schematic cross-section of a dividable fiber usable in producing the nonwoven fabric of the present invention.

FIG. 2 shows a schematic cross-section of another dividable fiber usable in producing the nonwoven fabric of the present invention.

FIG. 3 shows a schematic cross-section of still another dividable fiber usable in producing the nonwoven fabric of the present invention.

FIG. 4 shows a schematic cross-section of still another dividable fiber usable in producing the nonwoven fabric of the present invention.

FIG. 5 shows a schematic cross-section of still another dividable fiber usable in producing the nonwoven fabric of the present invention.

FIG. 6 shows a schematic cross-section of still another dividable fiber usable in producing the nonwoven fabric of the present invention.

FIG. 7 is a schematic cross-sectional view of a plasma processing apparatus used in the Examples.

DESCRIPTION OF EMBODIMENTS

(Basic nonwoven fabric)

The basic nonwoven fabric of the present invention comprises a polymethylpentene component and a polyethylene component, wherein the polyethylene component is fused, the polymethylpentene component accounts for 30% by volume or more of the total fibers constituting the basic nonwoven fabric, and the polyethylene component accounts for 30% by volume or more of the total fibers constituting the basic nonwoven fabric. Hereafter, the basic nonwoven fabric will be referred to simply as "nonwoven fabric".

Polymethylpentene has a melting point of approximately 220-240°C, which is higher than that of other polyolefins, and exhibits excellent heat resistance. The nonwoven fabric of the present invention exhibits excellent heat resistance because the highly heat-resistant polymethylpentene component accounts for 30% by volume or more of the total fibers constituting the nonwoven fabric. The higher the content of the polymethylpentene component, the more excellent the heat resistance. Therefore, it is preferable that the polymethylpentene component accounts for 35% by volume or more of the total fibers constituting the nonwoven fabric, and it is more preferable that it accounts for 40% by volume or more. On the other hand, as mentioned later, since it contains 30% by volume or more of polyethylene component, it also exhibits excellent mechanical strength. Therefore, the polymethylpentene component is 70% by volume or less, preferably 65% by volume or less, and more preferably 60% by volume or less.

Polymethylpentene is a copolymer containing at least 85 mol% 4-methylpentene-1, and may be a copolymer of 4-methylpentene-1 with one type, or two or more types of α-olefins (for example, ethylene, propylene, butene-1, hexene-1, octene-1, decene-1, tetradecene-1, octadecen-1, or the like). The polymethylpentene component(s) may be one type, or two or more types. When two or more types of polymethylpentene components are contained in the nonwoven fabric, the total amount thereof accounts for 30% by volume or more of the total fibers constituting the nonwoven fabric.

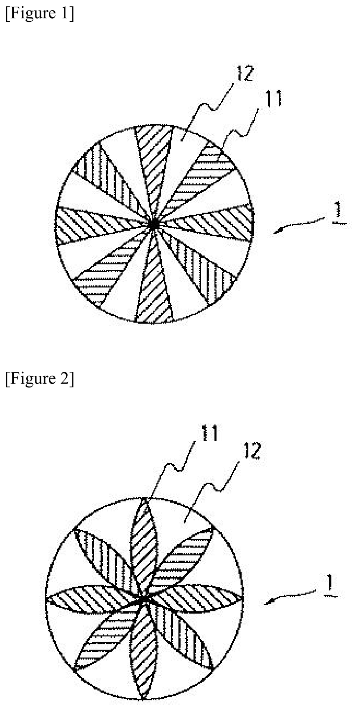

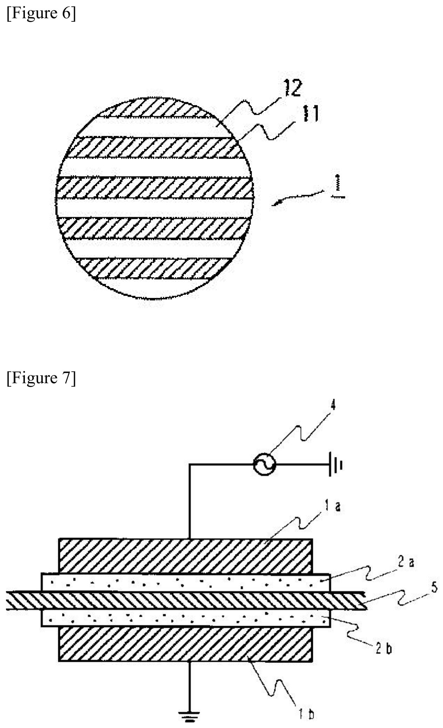

To ensure that the nonwoven fabric contains the polymethylpentene component in this amount, the nonwoven fabric may contain as its constituent fibers, for example, (1) core-sheath composite fibers having a resin component other than polymethylpentene as the sheath component and a polymethylpentene component as the core component, (2) core-sheath composite fibers having a polymethylpentene component as the sheath component and a resin component other than polymethylpentene as the core component, (3) orange-type composite fibers in which a polymethylpentene component and a resin component other than polymethylpentene alternately radiate from the center in the cross-section of fibers (see Figure 1 to Figure 5), (4) multiple bimetal-type composite fibers in which a polymethylpentene component and a resin component other than polymethylpentene are alternately layered in the cross-section of fibers (see Figure 6), and (5) single-component fibers composed solely of a polymethylpentene component.

Among these, (1) the core-sheath composite fibers having a resin component other than polymethylpentene as the sheath component and a polymethylpentene component as the core component are preferable, because it can enhance mechanical strength by utilizing the fusion bonding strength of the resin component other than polymethylpentene, and exhibits excellent heat resistance due to the polymethylpentene component as the core component.

The resin components other than polymethylpentene that can constitute the sheath component include, for example, polyolefin-based resins such as polypropylene-based resins and polyethylene-based resins, polyester-based resins such as polyester copolymers, and nylon-based resins such as nylon copolymers. Among these, the polyolefin-based resins having excellent chemical resistance and versatility are preferable, and the polyethylene-based resins having excellent fusion bonding strength are preferable.

The core-sheath composite fibers having a polyethylene component as the sheath component and a polymethylpentene component as the core component are preferable, because when the sheath component is the preferred polyethylene component, the fusion bonding strength of the polyethylene component are excellent, and although the polyethylene component has a relatively low melting point and poor heat resistance, it exhibits excellent heat resistance due to the polymethylpentene component as the core component. In connection with this, the polyethylene component may be, for example, high-density polyethylene with a density of $0.942 \, g/cm^3$ or more, medium-density polyethylene with a density of $0.930\text{-}0.942 \, g/cm^3$, low-density polyethylene with a density of $0.910\text{-}0.930 \, g/cm^3$, linear low-density polyethylene, ultra-high molecular weight polyethylene, or polyethylene copolymers. Among these, high-density polyethylene is preferable, because high-density polyethylene is reasonably stiff, and has good rigidity and resilience, and therefore, a nonwoven fabric having excellent handling properties can be provided.

In the case of this core-sheath composite fiber, to ensure that the nonwoven fabric exhibits excellent heat resistance and mechanical strength, the volume ratio between the resin component other than polymethylpentene (sheath component, for example, a polyethylene component) and the polymethylpentene component (core component) is preferably 30:70 to 70:30, more preferably 35:65 to 65:35, and most preferably 40:60 to 60:40.

The polymethylpentene component that is the core component need not be a single component, and it may also be two or more islands-in-sea type components. Furthermore, in the fiber cross-section, the core and sheath components may be arranged concentrically, or the core component may be arranged eccentrically. The concentric arrangement is preferable so as to provide a nonwoven fabric having excellent dimensional stability.

The content of the preferable core-sheath composite fibers is not particularly limited, so long as the polymethylpentene component in the nonwoven fabric accounts for 30% by volume or more of the total fibers constituting the nonwoven fabric and the polyethylene component accounts for 30% by volume or more of the total fibers constituting the nonwoven fabric. To make it easier to meet the volume ratio, the core-sheath composite fibers having the polyethylene component as the sheath component and the polymethylpentene component as the core component account for, preferably 50% by volume or more, more preferably 60% by volume or more, still more preferably 70% by volume or more, and most preferably 80% by volume or more.

For the following reasons, (3) the orange-type composite fibers in which a polymethylpentene component and a resin component other than polymethylpentene alternately radiate from the center in the cross-section of fibers (see Figure 1 to Figure 5), or (4) the multiple bimetal-type composite fibers in which a polymethylpentene component and a resin component other than polymethylpentene are alternately layered in the cross section of fibers (see Figure 6), are preferable. By applying a mechanical external force to these fibers, the polymethylpentene component and the resin component other than polymethylpentene are individually divided, and fibers with finer fiber diameters are generated, thereby providing nonwoven fabrics with fine pores. Furthermore, due to the large surface area of the constituent fibers of the nonwoven fabrics, the nonwoven fabrics may be ones having excellent retention properties for resins or liquids.

More specifically, by applying a mechanical external force to the aforementioned orange-type composite fibers or multiple bimetal-type composite fibers, it is possible to generate ultrafine fibers with a fiber diameter of 4.5 μm or less. Nonwoven fabrics containing such ultrafine fibers may be ones with fine pores, and due to their large fiber surface area, they may be ones having excellent retention properties for resins or liquids.

When a mechanical external force is applied to orange-type composite fiber 1 as shown in Figure 1, ultrafine fibers with a substantially triangular shape composed of polymethylpentene component 11, and ultrafine fibers with a substantially triangular shape composed of resin component 12 other than polymethylpentene are generated.

When a mechanical external force is applied to orange-type composite fiber 1 as shown in Figure 2, ultrafine fibers with a substantially elliptical shape composed of polymethylpentene component 11 or resin component 11 other than polymethylpentene, and ultrafine fibers with a substantially triangular shape composed of resin component 12 other than polymethylpentene or polymethylpentene component 12 are generated.

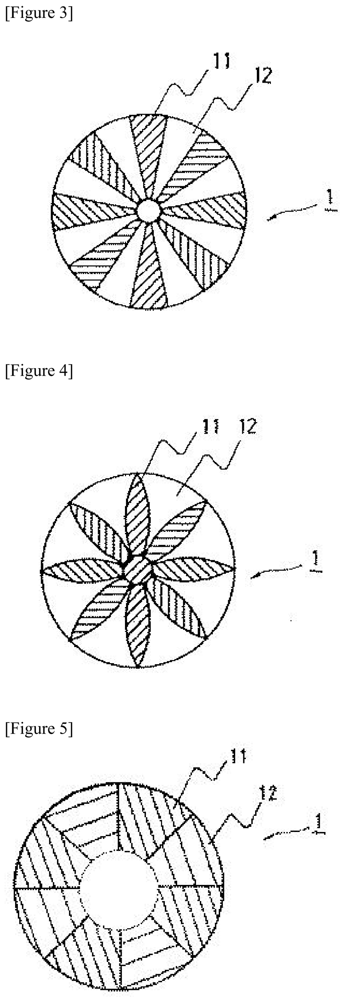

When a mechanical external force is applied to orange-type composite fiber 1 as shown in Figure 3, ultrafine fibers with a substantially triangular shape composed of polymethylpentene component 11 or resin component 11 other than polymethylpentene, and ultrafine fibers with a substantially triangular shape and ones with a circular shape composed of resin component 12 other than polymethylpentene or polymethylpentene component 12 are generated.

When a mechanical external force is applied to orange-type composite fiber 1 as shown in Figure 4, ultrafine fibers with a substantially elliptical shape and ones with a circular shape composed of polymethylpentene component 11 or resin component 11 other than polymethylpentene, and ultrafine fibers with a substantially triangular shape composed of resin component 12 other than polymethylpentene or polymethylpentene component 12 are generated.

When a mechanical external force is applied to orange-type composite fiber 1 with a hollow portion as shown in Figure 5, ultrafine fibers with a substantially trapezoidal shape composed of polymethylpentene component 11 or resin component 11 other than polymethylpentene, and ultrafine fibers with a substantially trapezoidal shape composed of resin component 12 other than polymethylpentene or polymethylpentene component 12 are generated.

When a mechanical external force is applied to multiple bimetal-type composite fiber 1 as shown in Figure 6, ultrafine fibers with a substantially trapezoidal shape and ones with a substantially semi-circular shape composed of polymethylpentene component 11, and ultrafine fibers with a substantially trapezoidal shape and ones with a substantially semi-circular shape composed of resin component 12 other than polymethylpentene are generated.

Thus, the ultrafine fibers generated from orange-type composite fibers or multiple bimetal-type composite fibers have non-circular, irregular cross-sectional shapes as the fiber cross-sectional shape. Since ultrafine fibers with such irregular cross-sectional shapes can be arranged in a densely packed state, a dense nonwoven fabric having excellent separation, isolation, concealment, and other properties can be provided.

Examples of mechanical external forces capable of dividing such composite fibers include a fluid jet such as a water jet, a calendar, a refiner, a pulper, a mixer, and a beater.

The fiber diameter of (5) the single-component fibers composed solely of a polymethylpentene component may be 0.1-30 $\mu$m. Ultrafine fibers with a fiber diameter of 4.5 $\mu$m or less is preferable, because a nonwoven fabric with fine pores can be provided, or because a nonwoven fabric having excellent retention properties for resins or liquids, due to the large surface area of the constituent fibers of the nonwoven fabric, can be provided. Such single-component ultrafine fibers composed solely of a polymethylpentene component may be prepared by applying a mechanical external force to the aforementioned orange-type composite fibers or multiple bimetal-type composite fibers, or by extracting and removing only the sea component from islands-in-sea type composite fibers with the polymethylpentene component as the island component. The latter method using the islands-in-sea type composite fibers is preferable, because finer ultrafine fibers may be obtained. More specifically, the fibers may be ultrafine fibers with a fiber diameter of 4.0 $\mu$m or less, ultrafine fibers with a fiber diameter of 3.0 $\mu$m or less, and ultrafine fibers with a fiber diameter of 2.0 $\mu$m or less.

The ultrafine fibers that can constitute the nonwoven fabric of the present invention are preferably drawn so that the nonwoven fabric exhibits excellent mechanical strength. As mentioned above, when ultrafine fibers are prepared from orange-type composite fibers, multiple bimetal-type composite fibers, or islands-in-sea type composite fibers, if the orange-type composite fibers, the multiple bimetal-type composite fibers, or the islands-in-sea type composite fibers are drawn prior to division, the ultrafine fibers prepared from these fibers are also in a drawn state.

On the other hand, the nonwoven fabric of the present invention contains the polyethylene component with excellent fusion bonding strength at 30% by volume or more of the total fibers constituting the nonwoven fabric. Since part or all of this polyethylene component participates in fusion bonding, the nonwoven fabric exhibits excellent mechanical strength. Since the higher the polyethylene content, the more excellent the fusion bonding strength and mechanical strength of the nonwoven fabric, the polyethylene component preferably accounts for 35% by volume or more of the total fibers constituting the nonwoven fabric, and more preferably accounts for 40% by volume or more. On the other hand, as mentioned above, to ensure excellent heat resistance, the polymethylpentene component must account for 30% by volume or more. Therefore, the polyethylene content accounts for 70% by volume or less, preferably 65% by volume or less, and more preferably 60% by volume or less.

Polyethylene may be high-density polyethylene, medium-density polyethylene, low-density polyethylene, linear low-density polyethylene, ultra-high molecular weight polyethylene, or polyethylene copolymers. Among these, high-density polyethylene is preferable, because high-density polyethylene is reasonably stiff, and has good rigidity and resilience, and therefore, a nonwoven fabric having excellent handling properties can be provided. The polyethylene copolymers may be copolymers with one or more $\alpha$-polyolefins such as propylene, butene-1, hexene-1, octene-1, decene-1, tetradecene-1, and octadecen-1. The polyethylene component(s) may be a polyethylene component, or two or more polyethylene components. When two or more polyethylene components are contained in the nonwoven fabric, the total amount thereof accounts for 30% by volume or more of the total fibers constituting the nonwoven fabric.

The nonwoven fabric contains the polyethylene component(s) in such quantities, and the polyethylene component(s) are fused. The nonwoven fabric can contain, as its constituent fibers, for example, (i) core-sheath composite fibers having the polyethylene component as the sheath component and a resin component other than polyethylene as the core component, (ro) orange-type composite fibers in which the polyethylene component(s) and a resin component(s) other than polyethylene alternately radiate from the center in the cross-section of fibers (see Figure 1 to Figure 5), (ha) multiple bimetal-type composite fibers in which the polyethylene component(s) and a resin component(s) other than polyethylene are alternately layered in the cross-section of fibers (see Figure 6), and (ni) single-component fibers composed solely of the polyethylene component(s).

Among these, (i) the core-sheath composite fibers having the polyethylene component as the sheath component and a resin component other than polyethylene as the core component are preferable, because the fusion bonding strength of the polyethylene component and the retention properties for fiber shape by the resin component other than polyethylene (core component) are excellent, thereby enhancing the mechanical strength of the nonwoven fabric.

As the resin component other than polyethylene that can constitute the core and sheath components of the core-sheath composite fibers, examples thereof include polyolefin-based resins (for example, polymethylpentene resin, polypropylene-based resins, and the like), polyester-based resins (for example, polyethylene terephthalate and the like), and nylon-based resins (for example, nylon 6, nylon 66, and the like). Among these, the polyolefin-based resins having excellent chemical resistance and versatility are preferable, and the polymethylpentene resin having excellent heat resistance is preferable.

In the case of this core-sheath composite fiber, to ensure that the nonwoven fabric exhibits excellent heat resistance and mechanical strength, the volume ratio between the polyethylene component and the resin component other than polyethylene (core component, for example, a polymethylpentene component) is preferably 30:70 to 70:30, more preferably 35:65 to 65:35, and most preferably 40:60 to 60:40 so that the nonwoven fabric exhibits excellent fusion bonding strength by the polyethylene component.

The resin component other than polyethylene that is the core component need not be a single component, and it may also be two or more islands-in-sea type components. Furthermore, in the fiber cross-section, the core and sheath components may be arranged concentrically, or the core component may be arranged eccentrically. The concentric arrangement is preferable so as to provide a nonwoven fabric having excellent dimensional stability.

The content of the preferable core-sheath composite fibers is not particularly limited, so long as the polyethylene component in the nonwoven fabric accounts for 30% by volume or more of the total fibers constituting the nonwoven fabric and the polymethylpentene component accounts for 30% by volume or more of the total fibers constituting the nonwoven fabric. To make it easier to meet the volume ratio, the core-sheath composite fibers having the polyethylene component as the sheath component and the polymethylpentene component as the core component account for, preferably 50% by volume or more, more preferably 60% by volume or more, still more preferably 70% by volume or more, and most preferably 80% by volume or more.

The nonwoven fabric of the present invention preferably contains the core-sheath composite fibers comprising a polyethylene component as the sheath component and a polymethylpentene component as the core component. However, to enhance the rigidity and compressive resistance of the nonwoven fabric, it may contain high-strength fibers with a tensile strength of 5 cN/dtex or more. In the high-strength fibers, the higher the tensile strength, the more excellent the aforementioned effects become. Therefore, when the high-strength fibers are composed of a single component, the tensile strength is preferably 8.5 cN/dtex or more, more preferably 8.9 cN/dtex or more, and most preferably 9.5 cN/dtex or more. In the other hand, when the high-strength fibers are composite fibers, and the mechanical strength of the nonwoven fabric is also enhanced by the fusion bonding of the high-strength fibers, the tensile strength is preferably 5.5 cN/dtex or more, more preferably 6.0 cN/dtex or more, and most preferably 6.2 cN/dtex or more. For any high-strength fiber, the upper limit of the tensile strength is not particularly limited, but is approximately 50 cN/dtex. The "tensile strength" as used herein refers to the tensile strength measured in accordance with JIS L 1015:2010 "Test methods for man-made staple fibres" Section 8.7.1 (Standard Time Test), using a constant-speed tension-type tensile testing machine under conditions of a grip spacing of 20 mm and a tensile speed of 20 mm/min.

The resin component constituting this high-strength fiber is not particularly limited, but may be, for example, polyolefin-based resins (for example, polypropylene-based resins, polyethylene-based resins, polymethylpentene-based resins, and the like), polyester-based resins (for example, polyethylene terephthalate, and polyester copolymers), nylon-based resins (for example, nylon 6, nylon 66, and nylon copolymers) alone, or combinations thereof. Among these, the polyolefin-based resins having excellent chemical resistance and versatility are preferable. For example, when the high-strength fibers are composed of a single component, they may be composed of ultra-high molecular weight polyethylene, polypropylene, or the like. When the high-strength fibers are composite fibers composed of two types of resin components, they may be core-sheath composite fibers having the polyethylene component (particularly, high-density polyethylene component) as the sheath component and the polypropylene component as the core component, core-sheath composite fibers having the polyethylene component (particularly, high-density polyethylene component) as the sheath component and the polymethylpentene component as the core component, or the like.

It is preferable that the nonwoven fabric of the present invention contains the core-sheath composite fibers having the polyethylene component as the sheath component and the polymethylpentene component as the core component. However, to further enhance the heat resistance of the nonwoven fabric, it may contain heat-resistant fibers with a melting point or decomposition temperature of 210°C or more. As resins constituting this heat-resistant fiber, examples thereof include polyphenylene sulfide (PPS), polybenzimidazole (PBI), polyether ether ketone (PEEK), polytetrafluoroethylene (PTFE), perfluoroalkoxy (PFA), fluoroethylene propylene (FEP), ethylene chlorotrifluoroethylene (ECTFE), ethylene tetrafluoroethylene (ETFE), polychlorotrifluoroethylene (PCTFE), polyimide (PI), polyamide-imide (PAI), and the like. The "melting point" refers to the melting temperature obtained from the differential thermal analysis (DTA) curve obtained by differential thermal analysis as specified in JIS K 7121-1987. The "decomposition temperature" refers to the temperature at which the mass of a completely dried test specimen decreases by 5% during thermogravimetric analysis conducted according to JIS K 7120-1987.

It is preferable that the nonwoven fabric of the present invention contains the core-sheath composite fibers having the polyethylene component as the sheath component and the polymethylpentene component as the core component, but the fiber diameter of the fibers constituting the nonwoven fabric, including this core-sheath composite fiber, is not particularly limited. To provide a nonwoven fabric that exhibits uniform fiber dispersion and excellent texture, can impart uniform strength, and has excellent denseness and retention properties for resins or liquids, the fiber diameter is preferably 0.1-35 $\mu$m, more preferably 0.5-28 $\mu$m, and most preferably 1-20 $\mu$m.

As mentioned above, it is preferable that it contains ultrafine fibers with a fiber diameter of 4.5 $\mu$m or less (preferably 4.0 $\mu$m or less, more preferably 3.0 $\mu$m or less, and most preferably 2.0 $\mu$m or less). The ultrafine fibers may be composed of, for example, polyolefin-based resins such as polymethylpentene-based resins, polypropylene-based resins, and polyethylene-based resins; polyester-based resins such as polyethylene terephthalate and polyester copolymers; nylon-based resins such as nylon 6, nylon 66, and nylon copolymers; and the like. Among these, the ultrafine fibers composed of the polyolefin-based resins having excellent chemical resistance and versatility are preferable, and ones composed of the polymethylpentene resin or polypropylene-based resins having excellent heat resistance are preferable.

The ultrafine fibers may be prepared, as mentioned above, by applying a mechanical external force to the orange-type composite fibers or multiple bimetal-type composite fibers, or by extracting and removing the sea component from the islands-in-sea type composite fibers.

The term "fiber diameter" as used herein means, when the fiber cross-sectional shape is circular, the diameter of the circle, and when it is non-circular, the diameter of a circle with the same area as its cross-sectional area is regarded as the fiber diameter.

The fiber length of nonwoven fabric constituent fibers, including core-sheath composite fibers and ultrafine fibers, is not particularly limited. Since the shorter the fiber length, the higher the degree of freedom of fibers, enabling the production of nonwoven fabrics having excellent uniform fiber dispersion and excellent texture, the fiber length is preferably 0.1-160 mm, more preferably 0.5-105 mm, still more preferably 1-55 mm, and most preferably 1-20 mm.

The nonwoven fabric of the present invention may contain two or more types of core-sheath composite fibers, ultrafine fibers, and/or heat-resistant fibers that differ from each other in resin composition, fiber diameter, and/or fiber length.

The nonwoven fabric of the present invention is in a state where the fibers are bonded together with each other by the fusion bonding of the polyethylene component, and, in addition to the fusion bonding, the fibers may also be entangled in three dimensions. This is because the three-dimensional entanglement further enhances the mechanical strength of the nonwoven fabric. Such a three-dimensional entanglement can be formed, for example, by applying a fluid jet such as a water jet or needles to a fiber web.

The nonwoven fabric of the present invention exhibits excellent mechanical strength, and more specifically, it is preferable that the nonwoven fabric has a direction with a tensile strength per mass per unit area of 2.5 N/5 cm-width or more. The reason why the tensile strength is evaluated by "per mass per unit area" is that when the mass per unit area is high, that is to say, when the fiber content is high, the mechanical strength will inevitably increase, and therefore, "per mass per unit area" that corresponds to the fiber content is used to objectively evaluate the mechanical strength of nonwoven fabrics. To show that the higher this tensile strength, the more excellent the mechanical strength, the tensile strength per mass per unit area is preferably 2.8 N/5 cm-width or more, more preferably 3.0 N/5 cm-width or more, and most preferably 3.2 N/5 cm-width or more. Since the higher this tensile strength, the more excellent the mechanical strength, the upper limit is not particularly limited, but it may be 10 N/5 cm-width or less.

The "tensile strength" as used herein is the value obtained by the following procedure:

1. Cut test strips measuring 200 mm in length and 50 mm in width from the nonwoven fabric.
2. Measure the tensile strength of the test strips using a tensile testing machine. The measurement conditions are: 100 mm between grips, and 300 mm/min tensile speed. Measure the strength at break.
3. Perform the operations described in steps 1-2 above three times, calculate the arithmetic mean of the strengths at the three break points, and use this as the tensile strength (unit: N/50 mm-width).

Confirmation of whether the nonwoven fabric possesses a direction with a tensile strength per mass per unit area of 2.5 N/5 cm-width or more is performed according to the following procedures:

1. Collect three test strips measuring 200 mm in length and 50 mm in width along a reference direction of the nonwoven fabric (for example, the machine direction, which is the production direction of the nonwoven fabric).

2. Collect three test strips measuring 200 mm in length and 50 mm in width, with the length direction defined as the direction rotated 10° from the aforementioned reference direction.

3. Similarly, collect three test strips measuring 200 mm in length and 50 mm in width for each of 16 directions, with the direction of rotation increasing by 10° relative to the reference direction. That is, collect three test strips for each of 18 directions, including the reference direction.

4. Measure the tensile strength of the test strips in each direction using the aforementioned method.

5. Identify the direction with the highest tensile strength based on the results of the tensile strength measurements in the 18 directions.

6. Calculate the tensile strength per mass per unit area (Tu) by dividing the tensile strength in the direction with the highest tensile strength (Tmax, unit: N/50 mm-width) by the mass per unit area (M, unit: $g/m^2$), that is, using the following formula:

$$Tu = Tmax/M$$

7. As a result, if the tensile strength per mass per unit area is 2.5 N/5 cm-width or more, at least that direction corresponds to the direction where the tensile strength per mass per unit area is 2.5 N/5 cm-width or more.

Due to the manufacturing process, nonwoven fabrics are produced as continuous nonwoven fabrics, and as a result, the fibers tend to be oriented more or less in the production direction. Therefore, the production direction during nonwoven fabric manufacturing is often to the direction where the tensile strength per mass per unit area is 2.5 N/5 cm-width or more.

Even when the tensile strength per mass per unit area is 2.5 N/5 cm-width or more, the absolute tensile strength may be too low to be practical. Therefore, the nonwoven fabric has a direction with, preferably a tensile strength of 100 N/5 cm-width or more, more preferably a tensile strength of 110 N/5 cm-width or more, still more preferably a tensile strength of 120 N/5 cm-width or more, most preferably a tensile strength of 130 N/5 cm-width or more. Particularly, it is preferable that this direction is the production direction during nonwoven fabric manufacturing.

To ensure that the nonwoven fabric of the present invention exhibits excellent heat resistance, it is preferable that the shrinkage rate when heated at 150°C is 5% or less. The lower the shrinkage rate, the more excellent the heat resistance. Therefore, the shrinkage rate when heated at 150°C is more preferably 4.5% or less, still more preferably 4.0% or less, and most preferably 3.5% or less.

The "shrinkage rate when heated at 150°C" is obtained by the following method:

1. From the nonwoven fabric, collect a test strip (area: Ab = 10000 $mm^2$) measuring 100 mm in the longitudinal direction (the production direction of the nonwoven fabric) and 100 mm in the transverse direction (the direction perpendicular to the longitudinal direction).

2. Place the test strips in a dryer set to a temperature of 150°C.

3. After 10 minutes, remove the test strips from the dryer. Measure the length of the test strips in the longitudinal direction and in the transverse direction, and calculate the area (Aa, unit: $mm^2$).

4. Calculate the shrinkage rate when heated (S, unit: %) using the following formula:

$$S = [(Ab-Aa)/Ab] \times 100 = (10000-Aa)/100$$

5. Repeat steps 1-4 three times, calculate the shrinkage rate when heated for the three test strips, and use the arithmetic mean as the "shrinkage rate when heated at 150°C".

The porosity of the nonwoven fabric of the present invention is not particularly limited, but the porosity is preferably 50% or more, more preferably 53% or more, and most preferably 56% or more, so that there is ample space to retain liquid, and the amount of liquid retention is high. On the other hand, a porosity that is too high tends to result in poor mechanical strength. Therefore, the porosity is preferably 80% or less, more preferably 75% or less, and most preferably 70% or less.

The porosity (P, unit: %) as used herein refers to the value obtained by the following formula:

$$P = 100-(Fr1+Fr2+\cdots+Frn)$$

Frn denotes the filling rate (unit: %) of component n constituting the nonwoven fabric, and refers to the value obtained from the following formula:

$$Frn = [(M \times Prn)/(T \times SGn)] \times 100$$

M denotes the mass per unit area of the nonwoven fabric (unit: $g/cm^2$), T denotes the thickness of the nonwoven fabric (unit: cm), Prn denotes the mass fraction of component n in the nonwoven fabric, and SGn denotes the density of component n (unit: $g/cm^3$), respectively.

The apparent density of the nonwoven fabric of the present invention is not particularly limited, but the apparent density is preferably $0.57 \, g/cm^3$ or less, more preferably $0.53 \, g/cm^3$ or less, and most preferably $0.50 \, g/cm^3$ or less, so that there is ample space to retain liquid, and the amount of liquid retention is high. On the other hand, an apparent density that is too low tends to result in poor mechanical strength. Therefore, the apparent density is preferably $0.23 \, g/cm^3$ or more, more preferably $0.28 \, g/cm^3$ or more, and most preferably $0.34 \, g/cm^3$ or more. This apparent density is a calculated value derived from the mass per unit area and the thickness of a nonwoven fabric. More specifically, it is a value obtained by dividing the mass per unit area (unit: $g/cm^2$) by the thickness (unit: cm).

The nonwoven fabric of the present invention preferably has a liquid retention rate of 5% or more after being pressurized at 5.7 MPa. This is because it is a nonwoven fabric that can retain liquid even when pressure is applied and has strong liquid retention capacity. Since it means that the higher this liquid retention rate, the stronger the liquid retention capacity, the liquid retention rate after being pressurized is preferably 6% or more, and more preferably 7% or more. The upper limit of the liquid retention rate after being pressurized is not particularly limited, but it may be 20% or less.

The "liquid retention rate" as used herein is the value obtained by the following method:

1. Cut the nonwoven fabric into circular pieces with a diameter of 30 mm, obtaining four circular test specimens.
2. Allow the circular test specimens to reach moisture equilibrium under conditions at a temperature of 20°C and a relative humidity of 65%, then measure their mass ($M_0$).
3. Immerse the circular test specimens in a potassium hydroxide aqueous solution with a specific gravity of 1.3 (20°C) for one hour to replace the air within the nonwoven fabrics with the aqueous solution, allowing the potassium hydroxide aqueous solution to be retained.
4. Sandwich the nonwoven fabrics between three circular filter papers (diameter = 30 mm) on top and bottom. Apply a pressure of 5.7 MPa for 30 seconds using a pressure pump, then measure the mass of the nonwoven fabrics ($M_1$).
5. Calculate the liquid retention rate (Rr, unit: %) using the following formula:

$$Rr = [(M_1 - M_0)/M_0] \times 100$$

6. Measure the liquid retention rate for the four circular test specimens and calculate the liquid retention rate for each. Calculate the arithmetic mean of the four liquid retention rates to determine the liquid retention rate of the nonwoven fabric in the present invention.

The mass per unit area of the nonwoven fabric of the present invention varies depending on its application and is not particularly limited, but may be 10-200 $g/m^2$. The mass per unit area is a mass per square meter. If the size of a nonwoven fabric is less than 1 $m^2$, a value converted to 1 $m^2$ is regarded as the mass per unit area.

The thickness of the nonwoven fabric of the present invention varies depending on its applications and is not particularly limited, but may be 0.03-2 mm. The "thickness" as used herein refers to the arithmetic mean obtained by performing measurements at a load of 5 N using an outside micrometer (0-25 mm) as defined in JIS B 7502:1994, at 10 randomly selected points.

The nonwoven fabric of the present invention is fused with the polyethylene component, contains the polymethylpentene component, has a high ratio of polyolefin-based resin components, and exhibits excellent chemical resistance. Since this configuration may be difficult to apply to various uses, various processing may be applied to facilitate application for various uses. For example, the nonwoven fabric may be colored with pigments or dyes, electrically charged, patterned, or have hydrophilic groups such as a sulfonic acid group, a carboxyl group, and a carbonyl group introduced.

The nonwoven fabric of the present invention exhibits excellent heat resistance and mechanical strength, making it a versatile material suitable for various applications. For example, it is suitable for use as a separator for electrochemical elements, a separator support for batteries such as nickel-zinc batteries, or a separator support for water electrolysis. As electrochemical elements, examples thereof include alkaline primary batteries such as alkaline manganese batteries, mercury batteries, silver oxide batteries, air batteries, and the like; alkaline secondary batteries such as nickel-cadmium batteries, silver-zinc batteries, silver-cadmium batteries, nickel-zinc batteries, nickel-metal hydride batteries, lead-acid batteries, and the like; lithium-ion secondary batteries; sodium-ion batteries; multivalent ion batteries such as magnesium, aluminum, calcium, zinc, and the like; lithium-sulfur batteries; metal-air batteries such as lithium, zinc, and the like; lithium-ion capacitors; fluoride-ion batteries; potassium-ion batteries; and the like. In particular, even when used as separators for alkaline secondary batteries such as nickel-cadmium batteries, nickel-metal hydride batteries, and the like, due to their excellent heat resistance and mechanical strength, alkaline secondary batteries that are suitable for use in automotive applications requiring heat resistance can be produced.

Regarding separators for alkaline secondary batteries such as nickel-cadmium batteries, nickel-metal hydride batteries, and the like, which are suitable, since the polymethylpentene component and the polyethylene component are contained, the polyethylene component is fused, the polymethylpentene component accounts for 30% by volume or more of the total fibers constituting the nonwoven fabric, and the polyethylene component accounts for 30% by volume or more of the total fibers constituting the nonwoven fabric, it exhibits excellent heat resistance and mechanical strength, and is suitable for use in applications requiring heat resistance of 100°C or more, for example, as separators for alkaline secondary batteries for automotive use.

When the nonwoven fabric contains ultrafine fibers generated from the orange-type composite fibers or multiple bimetal-type composite fibers, or ultrafine fibers obtained by extracting and removing the sea component from the islands-in-sea type composite fibers, a separator made of a nonwoven fabric with fine pores can be provided. Since such a separator has nonwoven fabric constituent fibers with a large surface area and exhibits excellent electrolyte retention properties, the separator is characterized in that alkaline secondary batteries not only excellent in use under high temperature conditions exceeding 100°C but also excellent in operation at low temperatures of 60°C or less can be produced. When the nonwoven fabric contains ultrafine fibers generated from the orange-type composite fibers or multiple bimetal-type composite fibers, since the cross-sectional shape of these ultra-fine fibers is irregular, and the path from one side of the separator (nonwoven fabric) to the other is complex and long, the separator is characterized in that short circuits due to dendrites are unlikely to occur.

When the separator contains high-strength fibers, during the manufacturing of alkaline secondary batteries, burrs on the electrodes are difficult to penetrate and the separator is less likely to cause breakage. Therefore, the separator is characterized in that alkaline secondary batteries can be produced with high yield. In addition, since the separator exhibits excellent compressive strength and can maintain the electrode spacing even after battery assembly, it exhibits excellent electrolyte retention properties and makes it easier to prevent physical short circuits caused by fine particles when active material falls off.

Furthermore, when the separator contains heat-resistant fibers, the separator is characterized in that it can withstand prolonged use under high temperature conditions exceeding 100°C.

When the nonwoven fabric of the present invention is used as a separator for alkaline secondary batteries, it is preferably composed solely of polyolefin-based fibers made entirely from polyolefin resin so that it exhibits excellent electrolyte resistance properties. For example, it is preferable that it is composed of a type or two or more types of polyolefin-based fibers, such as core-sheath composite fibers having a polyethylene component (particularly, high-density polyethylene component) as the sheath component and a polymethylpentene component as the core component; core-sheath composite fibers having a polyethylene component (particularly, high-density polyethylene component) as the sheath component and a polypropylene component as the core component; single-component fibers (ultrafine fibers or high-strength fibers) composed of polyethylene, polypropylene, or polymethylpentene; orange-type or multiple bimetal-type composite fibers composed of a polypropylene composition and a polymethylpentene composition; orange-type or multiple bimetal-type composite fibers composed of a polyethylene composition and a polymethylpentene composition; or the like.

When the separator of the present invention has a porosity of 50-80% and/or an apparent density of 0.23-0.57 g/cm$^3$, due to its high electrolyte retention capacity and excellent mechanical strength, it is suitable for use as separators for alkaline secondary batteries for automotive use.

Furthermore, when the separator of the present invention has a liquid retention rate of 5% or more after being pressurized at 5.7 MPa, even when pressure is applied during electrode array formation, it can retain the electrolyte and does not impair ion permeability, and therefore, long-life alkaline secondary batteries can be produced.

The mass per unit area of the separator of the present invention may be 10-200 g/m$^2$, 20-100 g/m$^2$, 25-85 g/m$^2$, and 30-70 g/m$^2$. The thickness may be 0.01-0.30 mm, 0.03-0.25 mm, and 0.05-0.20 mm.

As mentioned above, the separator of the present invention is preferably composed solely of polyolefin-based fibers, but since aqueous electrolytes tend to exhibit poor injection properties and poor retention properties, it is preferable to introduce hydrophilic groups, such as a sulfonic acid group, a carboxyl group, and carbonyl group, to impart affinity with the electrolyte.

The separator for electrochemical elements including the separators for alkaline secondary batteries of the present invention may be composed solely of the nonwoven fabric as mentioned above, or may be laminated with other nonwoven fabrics, woven fabrics, knitted fabrics, nets, films, or the like. By laminating them, various functions such as reinforcement and separation may be imparted.

(First nonwoven fabric)

Among the basic nonwoven fabric of the present invention, the first nonwoven fabric of the present invention is a nonwoven fabric having excellent permeability in addition to heat resistance and mechanical strength. Therefore, only the differences between the first nonwoven fabric and the basic nonwoven fabric will be explained below.

The ratio (L/D) of the fiber diameter (D, unit: $\mu$m) to the length (L, unit: $\mu$m) in the fibers, including core-sheath composite fibers, ultrafine fibers, and heat-resistant fibers, constituting the first nonwoven fabric of the present invention is preferably 350 or more. This is because when the ratio (L/D) is 350 or more, since the fiber length is longer compared to the fiber diameter, the fibers constituting the first nonwoven fabric, including the core-sheath composite fibers, tend to tangle easily, and further, when the fiber content is the same, due to the low number of fibers and the few points where fibers connect, the tensile strength is high, and therefore, the first nonwoven fabric exhibits excellent mechanical strength. The greater the ratio (L/D), the stronger this tendency becomes. Therefore, the ratio (L/D) is preferably 400 or more, more preferably 450 or more, still more preferably 500 or more, still more preferably 550 or more, and most preferably 600 or more. On the other hand, when the ratio (L/D) is high, as mentioned above, the fibers tend to tangle easily, acting in a way that inhibits their uniform dispersion. Therefore, the ratio (L/D) is preferably 7000 or less, more preferably 2000 or less, still more preferably 1600 or less, still more preferably 1300 or less, and most preferably 1000 or less.

The fiber diameter of the core-sheath composite fibers (particularly, core-sheath composite fibers having a polyethylene-based resin as the sheath component and a polymethylpentene-based resin as the core component) used in the present invention is not particularly limited, so long as the fibers meet the ratio (L/D). To achieve excellent mechanical strength and heat resistance of the first nonwoven fabric, the fiber diameter is preferably 10 $\mu$m or more, more preferably 11 $\mu$m or more, still more preferably 12 $\mu$m or more, still more preferably 13 $\mu$m or more, still more preferably 14 $\mu$m or more, and most preferably 15 $\mu$m or more. On the other hand, when the core-sheath composite fibers are too thick, it tends to result in a first nonwoven fabric having poor fiber dispersion. Therefore, the fiber diameter is preferably 35 $\mu$m or less, more preferably 22 $\mu$m or less, still more preferably 20 $\mu$m or less, and most preferably 19 $\mu$m or less.

The fiber length of the fibers, including core-sheath composite fibers, ultrafine fibers, and heat-resistant fibers, constituting the first nonwoven fabric is not particularly limited, but the longer the fiber length, the more easily the fibers constituting the first nonwoven fabric tend to tangle, and the more excellent the mechanical strength tends to become. Therefore, the fiber length is preferably 6 mm or more, more preferably 8 mm or more, and most preferably 10 mm or more. On the other hand, when the fiber length is long, the fibers tend to tangle easily, acting in a way that inhibits their uniform dispersion. Therefore, the fiber length is preferably 105 mm or less, more preferably 55 mm or less, and most preferably 20 mm or less. Particularly, since the polyethylene component as the sheath component of core-sheath composite fibers is fused, it is preferable that the fiber length falls within the aforementioned range to facilitate entanglement to a certain degree.

The first nonwoven fabric of the present invention may contain two or more types of core-sheath composite fibers, high-strength fibers, ultrafine fibers, and/or heat-resistant fibers that differ from each other in resin composition, resin arrangement in the fiber cross-section, fiber diameter, ratio (L/D), and/or fiber length.

The first nonwoven fabric of the present invention exhibits excellent mechanical strength, and more specifically, it has a direction with a tensile strength per mass per unit area of 2.0 N/5 cm-width or more. The reason why the tensile strength is evaluated by "per mass per unit area" is that when the mass per unit area is high, that is to say, when the fiber content is high, the mechanical strength will inevitably increase, and therefore, "per mass per unit area" that corresponds to the fiber content is used to objectively evaluate the mechanical strength of the first nonwoven fabric. To show that the higher this tensile strength, the more excellent the mechanical strength, the tensile strength per mass per unit area is preferably 2.2 N/5 cm-width or more, and more preferably 2.4 N/5 cm-width or more. Since the higher this tensile strength, the more excellent the mechanical strength, the upper limit is not particularly limited, but it may be 10 N/5 cm-width or less.

Verification of whether the first nonwoven fabric has a direction with a tensile strength per mass per unit area of 2.0 N/5 cm-width or more is performed in the same manner as for the aforementioned basic nonwoven fabric.

Due to the manufacturing process, the first nonwoven fabric is produced as a continuous first nonwoven fabric, and as a result, the fibers tend to be oriented more or less in the production direction. Therefore, the production direction during first nonwoven fabric manufacturing is often to the direction where the tensile strength per mass per unit area is 2.0 N/5 cm-width or more.

Even when the first nonwoven fabric has a direction with a tensile strength per mass per unit area of 2.0 N/5 cm-width or more, the absolute tensile strength may be too low to be practical. Therefore, the first nonwoven fabric has a direction with, preferably a tensile strength of 20 N/5 cm-width or more, more preferably a tensile strength of 25 N/5 cm-width or more, and most preferably a tensile strength of 30 N/5 cm-width or more. Particularly, it is preferable that this direction is the production direction during first nonwoven fabric manufacturing.

As mentioned above, even when the first nonwoven fabric of the present invention has a direction with a tensile strength of 20 N/5 cm-width or more, if a tensile strength in other directions is weak, it may break easily in those directions and it may be not practical. Therefore, the tensile strength in the direction perpendicular to the direction with a tensile strength of 20 N/5 cm-width or more is, preferably 15 N/5 cm-width or more, more preferably 18 N/5 cm-width or more, and most preferably 20 N/5 cm-width or more. As mentioned above, since it is preferable that the direction with a tensile strength of 20 N/5 cm-width or more is the production direction during first nonwoven fabric manufacturing, it is preferable that the direction perpendicular to this direction is the width direction during first nonwoven fabric manufacturing.

In addition to the fact that the first nonwoven fabric of the present invention has a direction with a tensile strength per mass per unit area is 2.0 N/5 cm-width or more, the thickness of the first nonwoven fabric is 100 $\mu$m or less. Therefore, it is a nonwoven fabric with excellent permeability. The thinner the thickness, the more excellent the permeability, and therefore, the thickness is preferably 80 $\mu$m or less, more preferably 70 $\mu$m or less, still more preferably 60 $\mu$m or less, and most preferably 50 $\mu$m or less. The lower limit of the thickness is not particularly limited, but is preferably 10 $\mu$m or more, so that the mechanical strength is excellent.

The porosity of the first nonwoven fabric of the present invention is not particularly limited, but is preferably 60% or more, more preferably 65% or more, and most preferably 70% or more so that the first nonwoven fabric exhibits excellent permeability. On the other hand, a porosity that is too high tends to result in poor mechanical strength. Therefore, the porosity is preferably 90% or less, more preferably 85% or less, and most preferably 80% or less.

The mass per unit area of the first nonwoven fabric of the present invention varies depending on its application and is not particularly limited. When it is 20 g/m$^2$ or less, due to its low fiber content, thin first nonwoven fabrics can be produced, and it is suitable because it exhibits excellent permeability. For example, it is the first nonwoven fabric with excellent ion permeability and fluid permeability. The lower the mass per unit area, the more excellent the aforementioned effects become. Therefore, it is preferably 18 g/m$^2$ or less, and more preferably 16 g/m$^2$ or less. On the other hand, a mass per unit area that is too low tends to result in poor mechanical strength. Therefore, the mass per unit area is more preferably 3 g/m$^2$ or more, and most preferably 5 g/m$^2$ or more.

The apparent density of the first nonwoven fabric of the present invention is not particularly limited, but it is preferably 0.35 g/cm$^3$ or less, more preferably 0.30 g/cm$^3$ or less, and most preferably 0.28 g/cm$^3$ or less so that the first nonwoven fabric exhibits excellent permeability. On the other hand, an apparent density that is too low tends to result in poor mechanical strength. Therefore, the apparent density is preferably 0.10 g/cm$^3$ or more, more preferably 0.15 g/cm$^3$ or more, and most preferably 0.20 g/cm$^3$ or more.

The first nonwoven fabric of the present invention contains the polymethylpentene component and exhibits excellent heat resistance, preferably with a shrinkage rate of 5% or less when heated at 150°C. The lower the shrinkage rate, the more excellent the heat resistance. Therefore, the shrinkage rate when heated at 150°C is more preferably 4.5% or less, and ideally 0%.

(Second nonwoven fabric)

The second nonwoven fabric of the present invention comprises core-sheath composite fibers having a polyethylene component as the sheath component and a polymethylpentene component as the core component, wherein the polyethylene component that is the sheath component of the core-sheath composite fibers is fused, the polymethylpentene component accounts for 30% by volume or more of the total fibers constituting the second nonwoven fabric, and the polyethylene component accounts for 30% by volume or more of the total fibers constituting the second nonwoven fabric.

Polymethylpentene has a melting point of approximately 220-240°C, which is higher than that of other polyolefins, and exhibits excellent heat resistance. The second nonwoven fabric of the present invention exhibits excellent heat resistance because the polymethylpentene component with excellent heat resistance accounts for 30% by volume or more of the total fibers constituting the second nonwoven fabric. The higher the content of the polymethylpentene component, the more excellent the heat resistance. Therefore, it is preferable that the polymethylpentene component accounts for 35% by volume or more of the total fibers constituting the second nonwoven fabric, and it is more preferable that it accounts for 40% by volume or more. On the other hand, as mentioned later, since it contains 30% by volume or more of polyethylene component, it also exhibits excellent mechanical strength. Therefore, the polymethylpentene component is 70% by volume or less, preferably 65% by volume or less, and more preferably 60% by volume or less.

The polymethylpentene component constituting the core-sheath composite fibers may be the same as the polymethylpentene component constituting the first nonwoven fabric, and may be one type or two or more types. When two or more polymethylpentene components are contained in the second nonwoven fabric, the total amount thereof accounts for 30% by volume or more of the total fibers constituting the second nonwoven fabric.

The polyethylene component as the sheath component of the core-sheath composite fibers contained in the second nonwoven fabric exhibits excellent fusion bonding strength. Although the polyethylene component has a relatively low melting point and poor heat resistance, it exhibits excellent heat resistance due to the polymethylpentene component as the core component. This polyethylene component may be, as with the first nonwoven fabric, high-density polyethylene, medium-density polyethylene, low-density polyethylene, linear low-density polyethylene, ultra-high molecular weight polyethylene, or polyethylene copolymers. Among these, high-density polyethylene is preferable, because high-density polyethylene is reasonably stiff, and has good rigidity and resilience, and therefore, a nonwoven fabric having excellent handling properties can be provided. The polyethylene component(s) may be a polyethylene component, or two or more polyethylene components.

The second nonwoven fabric of the present invention contains the polyethylene component with excellent fusion bonding strength at 30% by volume or more of the total fibers constituting the second nonwoven fabric. Since part or all of this polyethylene component participates in fusion bonding, the second nonwoven fabric exhibits excellent mechanical strength. Since the higher the polyethylene content, the more excellent the fusion bonding strength and mechanical strength of the second nonwoven fabric, the polyethylene component preferably accounts for 35% by volume or more of the total fibers constituting the second nonwoven fabric, and more preferably accounts for 40% by volume or more. On the other hand, as mentioned above, to ensure excellent heat resistance, the polymethylpentene component must account for 30% by volume or more. Therefore, the polyethylene content accounts for 70% by volume or less, preferably 65% by volume or less, and more preferably 60% by volume or less. When two or more polyethylene components are contained in the second nonwoven fabric, the total amount thereof accounts for 30% by volume or more of the total fibers constituting the second nonwoven fabric.

The volume ratio between the polyethylene component (sheath component) and the polymethylpentene component (core component) is preferably 30:70 to 70:30, more preferably 35:65 to 65:35, and most preferably 40:60 to 60:40 to enable the second nonwoven fabric to achieve both heat resistance and mechanical strength.

The polymethylpentene component that is the core component need not be a single component, and it may also be two or more islands-in-sea type components as the fiber cross-section. Furthermore, in the fiber cross-section, the core and sheath components may be arranged concentrically, or the core component may be arranged eccentrically. The concentric arrangement is preferable so as to provide a second nonwoven fabric having excellent dimensional stability.

The content of the core-sheath composite fibers is not particularly limited, so long as the polymethylpentene component in the second nonwoven fabric accounts for 30% by volume or more of the total fibers constituting the second nonwoven fabric and the polyethylene component accounts for 30% by volume or more of the total fibers constituting the second nonwoven fabric. To make it easier to meet the volume ratio, the core-sheath composite fibers account for, preferably 50% by volume or more, more preferably 60% by volume or more, still more preferably 70% by volume or more, and most preferably 80% by volume or more.

To ensure that the second nonwoven fabric contains the polymethylpentene component and the polyethylene component in these amounts, the second nonwoven fabric contains, as its constituent fibers, the core-sheath composite fibers having a polyethylene component as the sheath component and a polymethylpentene component as the core component. As other fibers, the second nonwoven fabric contains, for example, (1) core-sheath composite fibers having a resin component other than polymethylpentene and polyethylene as the sheath component and a polymethylpentene component as the core component, (2) core-sheath composite fibers having a polyethylene component as the sheath component and a resin component other than polyethylene and polymethylpentene as the core component, (3) core-sheath composite fibers having a polymethylpentene component as the sheath component and a resin component other than polymethylpentene as the core component, (4) core-sheath composite fibers having a resin component other than polyethylene as the sheath component and a polyethylene component as the core component, (5) orange-type composite fibers in which a polymethylpentene component and a resin component other than polymethylpentene, or a polyethylene component and a resin component other than polyethylene, alternately radiate from the center in the cross-section of fibers (see Figure 1 to Figure 5), (6) multiple bimetal-type composite fibers in which a polymethylpentene component and a resin component other than polymethylpentene, or a polyethylene component and a resin component other than polyethylene, are alternately layered in the cross-section of fibers (see Figure 6), (7) single-component fibers composed solely of a polymethylpentene component, (8) single-component fibers composed solely of a polyethylene component, (9) single-component fibers composed solely of a resin component other than polymethylpentene and polyethylene, or the like.

With respect to (5) the orange-type composite fibers in which a polymethylpentene component and a resin component other than polymethylpentene, or a polyethylene component and a resin component other than polyethylene, alternately radiate from the center in the cross-section of fibers (see Figure 1 to Figure 5), or (6) the multiple bimetal-type composite fibers in which a polymethylpentene component and a resin component other than polymethylpentene, or a polyethylene component and a resin component other than polyethylene, are alternately layered in the cross-section of fibers (see Figure 6), by applying a mechanical external force to these fibers, the polymethylpentene component, the polyethylene component, or the resin component other than polyethylene and polymethylpentene are individually divided, and fine fibers having a fiber diameter of 4.5 μm or less are generated, thereby providing the second nonwoven fabric with fine pores. Furthermore, due to the large surface area of the constituent fibers of the second nonwoven fabric, the second nonwoven fabric may be one having excellent retention properties for resins or liquids.

By applying a mechanical external force, for example, a fluid jet such as a water jet, a calendar, a refiner, a pulper, a mixer, a beater, or the like, to orange-type composite fiber 1 as shown in Figure 1 to Figure 5, or multiple bimetal-type composite fiber 1 as shown in Figure 6, ultrafine fibers with irregular cross-sectional shapes similar to the ultrafine fibers explained in the first nonwoven fabric are generated, and function similarly to the first nonwoven fabric.

(7) The single-component fibers composed solely of a polymethylpentene component, (8) the single-component fibers composed solely of a polyethylene component, or (9) the single-component fibers composed solely of a resin component other than polymethylpentene and polyethylene may have a fiber diameter of 0.1-30 $\mu$m, similar to the first nonwoven fabric, and are preferably ultrafine fibers of 4.5 $\mu$m or less, more preferably ultrafine fibers of 4.0 $\mu$m or less, still more preferably ultrafine fibers of 3.0 $\mu$m or less, and most preferably ultrafine fibers of 2.0 $\mu$m or less. Such ultrafine fibers can be produced in the same manner as for the first nonwoven fabric. Furthermore, the ultrafine fibers that can constitute the second nonwoven fabric are preferably drawn, similar to the first nonwoven fabric, so that the second nonwoven fabric exhibits excellent mechanical strength.

The second nonwoven fabric of the present invention contains the core-sheath composite fibers having a polyethylene component as the sheath component and a polymethylpentene component as the core component. To enhance the rigidity and compressive resistance of the second nonwoven fabric, it may contain high-strength fibers with a tensile strength of 5 cN/dtex or more, similar to the first nonwoven fabric. When the high-strength fibers are composed of a single component, the tensile strength is preferably 8.5 cN/dtex or more, more preferably 8.9 cN/dtex or more, and most preferably 9.5 cN/dtex or more. On the other hand, when the high-strength fibers are composite fibers, and the mechanical strength of the second nonwoven fabric is also enhanced by the fusion bonding of the high-strength fibers, the tensile strength is preferably 5.5 cN/dtex or more, more preferably 6.0 cN/dtex or more, and most preferably 6.2 cN/dtex or more. For any high-strength fiber, the upper limit of the tensile strength is not particularly limited, but is approximately 50 cN/dtex. The high-strength fibers can be composed of the same resin components as the first nonwoven fabric.

The second nonwoven fabric of the present invention contains the core-sheath composite fibers having a polyethylene component as the sheath component and a polymethylpentene component as the core component. The second nonwoven fabric can contain heat-resistant fibers similar to those in the first nonwoven fabric, thereby exhibiting more excellent heat resistance.

The second nonwoven fabric of the present invention contains the core-sheath composite fibers having a polyethylene component as the sheath component and a polymethylpentene component as the core component. The fiber diameter of the fibers constituting the second nonwoven fabric, including the core-sheath composite fibers, is not particularly limited. To provide the second nonwoven fabric that exhibits uniform fiber dispersion, can impart uniform strength, and has excellent retention properties for resins or liquids, the fiber diameter is preferably 0.1-35 $\mu$m, more preferably 0.5-28 $\mu$m, and most preferably 1-20 $\mu$m.

As mentioned above, it is preferable that it contains ultrafine fibers with a fiber diameter of 4.5 $\mu$m or less (preferably 4.0 $\mu$m or less, more preferably 3.0 $\mu$m or less, and most preferably 2.0 $\mu$m or less). The ultrafine fibers may be composed of, for example, polyolefin-based resins such as polymethylpentene-based resins, polypropylene-based resins, and polyethylene-based resins; polyester-based resins such as polyethylene terephthalate and polyester copolymers; nylon-based resins such as nylon 6, nylon 66, and nylon copolymers; and the like. Among these, the ultrafine fibers composed of the polyolefin-based resins having excellent chemical resistance and versatility are preferable, and ones composed of the polymethylpentene resin or polypropylene-based resins having excellent heat resistance are preferable.

The ultrafine fibers may be prepared, as mentioned above, by applying a mechanical external force to the orange-type composite fibers or multiple bimetal-type composite fibers, or by extracting and removing the sea component from the islands-in-sea type composite fibers.

The ratio (L/D) of the fiber diameter (D, unit: $\mu$m) to the length (L, unit: $\mu$m) in the core-sheath composite fibers constituting the second nonwoven fabric of the present invention is 350 or more. This is because since the ratio (L/D) is 350 or more and the fiber length is longer compared to the fiber diameter, the fibers constituting the second nonwoven fabric, including the core-sheath composite fibers, tend to tangle easily with each other, and further, when the fiber content is the same, due to the low number of fibers and the few points where fibers connect, the tensile strength is high, and therefore, the second nonwoven fabric exhibits excellent mechanical strength. The greater the ratio (L/D), the stronger this tendency becomes. Therefore, the ratio (L/D) is preferably 400 or more, more preferably 450 or more, still more preferably 500 or more, still more preferably 550 or more, and most preferably 600 or more. On the other hand, when the ratio (L/D) is high, as mentioned above, the fibers tend to tangle easily, acting in a way that inhibits their uniform dispersion. Therefore, the ratio (L/D) is preferably 7000 or less, more preferably 2000 or less, still more preferably 1600 or less, still more preferably 1300 or less, and most preferably 1000 or less.

The fiber diameter of the core-sheath composite fibers constituting the second nonwoven fabric of the present invention is not particularly limited, so long as the fibers meet the ratio (L/D). To achieve excellent mechanical strength and heat resistance of the second nonwoven fabric, the fiber diameter is preferably 10 $\mu$m or more, more preferably 11 $\mu$m or more, still more preferably 12 $\mu$m or more, still more preferably 13 $\mu$m or more, still more preferably 14 $\mu$m or more, and most preferably 15 $\mu$m or more. On the other hand, when the core-sheath composite fibers are too thick, it tends to result in a second nonwoven fabric having poor fiber dispersion. Therefore, the fiber diameter is preferably 35 $\mu$m or less, more preferably 22 $\mu$m or less, still more preferably 20 $\mu$m or less, and most preferably 19 $\mu$m or less.

The fiber length of the fibers, including core-sheath composite fibers, ultrafine fibers, and heat-resistant fibers, constituting the second nonwoven fabric is not particularly limited, but the longer the fiber length, the more easily the fibers constituting the second nonwoven fabric tend to tangle, and the more excellent the mechanical strength tends to become. Therefore, the fiber length is preferably 6 mm or more, more preferably 8 mm or more, and most preferably 10 mm or more. On the other hand, when the fiber length is long, the fibers tend to tangle easily, acting in a way that inhibits their uniform dispersion. Therefore, the fiber length is preferably 105 mm or less, more preferably 55 mm or less, and most preferably 20 mm or less. Particularly, since the polyethylene component as the sheath component of core-sheath composite fibers is fused, it is preferable that the fiber length falls within the aforementioned range to facilitate entanglement to a certain degree.

The second nonwoven fabric of the present invention may contain two or more types of core-sheath composite fibers, high-strength fibers, ultrafine fibers, and/or heat-resistant fibers that differ from each other in resin composition, resin arrangement in the fiber cross-section, fiber diameter, ratio (L/D), and/or fiber length.

In addition to the fact that the second nonwoven fabric of the present invention has a ratio (L/D) of 350 or more, the thickness of the second nonwoven fabric is 100 $\mu$m or less. Therefore, it is a nonwoven fabric with excellent permeability. The thinner the thickness, the more excellent the permeability, and therefore, the thickness is preferably 80 $\mu$m or less, more preferably 70 $\mu$m or less, still more preferably 60 $\mu$m or less, and most preferably 50 $\mu$m or less. The lower limit of the thickness is not particularly limited, but is preferably 10 $\mu$m or more, so that the mechanical strength is excellent.

The second nonwoven fabric of the present invention is in a state where the fibers are bonded together with each other by the fusion bonding of the polyethylene component, and, in addition to the fusion bonding, the fibers may also be entangled in three dimensions. This is because the three-dimensional entanglement further enhances the mechanical strength of the second nonwoven fabric. Such a three-dimensional entanglement can be formed, for example, by applying a fluid jet such as a water jet or needles to a fiber web.

The second nonwoven fabric of the present invention exhibits excellent mechanical strength due to the fusion bonding of the polyethylene component. Similar to the first nonwoven fabric, it is preferable that the second nonwoven fabric has a direction with a tensile strength per mass per unit area of 2.0 N/5 cm-width or more. Similar to the first nonwoven fabric, the tensile strength per mass per unit area is more preferably 2.2 N/5 cm-width or more, and most preferably 2.4 N/5 cm-width or more. Since the higher this tensile strength per mass per unit area, the more excellent the mechanical strength, the upper limit is not particularly limited, but it may be 10 N/5 cm-width or less.

In the second nonwoven fabric, similar to the first nonwoven fabric, the production direction during second nonwoven fabric manufacturing is preferably a direction where the tensile strength per mass per unit area is 2.0 N/5 cm-width or more. Similar to the first nonwoven fabric, the second nonwoven fabric has a direction with, preferably a tensile strength of 20 N/5 cm-width or more, more preferably a tensile strength of 25 N/5 cm-width or more, and most preferably a tensile strength of 30 N/5 cm-width or more. Particularly, it is preferable that this direction is the production direction during second nonwoven fabric manufacturing.

Furthermore, in the second nonwoven fabric, similar to the first nonwoven fabric, the tensile strength in the direction perpendicular to the direction with a tensile strength of 20 N/5 cm-width or more is, preferably 15 N/5 cm-width or more, more preferably 18 N/5 cm-width or more, and most preferably 20 N/5 cm-width or more. Since it is preferable that the direction with a tensile strength of 20 N/5 cm-width or more is the production direction during second nonwoven fabric manufacturing, it is preferably that the direction perpendicular to this direction is the width direction during second nonwoven fabric manufacturing.

Similar to the first nonwoven fabric, the porosity of the second nonwoven fabric of the present invention is preferably 60% or more, more preferably 65% or more, and most preferably 70% or more to exhibit excellent permeability. On the other hand, a porosity that is too high tends to result in poor mechanical strength. Therefore, the porosity is preferably 90% or less, more preferably 85% or less, and most preferably 80% or less.

The mass per unit area of the second nonwoven fabric of the present invention varies depending on its application, and is not particularly limited. When it is 20 g/m$^2$ or less, due to its low fiber content, thin second nonwoven fabrics can be produced, and it is suitable because it exhibits excellent permeability. For example, it is the second nonwoven fabric with excellent ion permeability and fluid permeability. The lower the mass per unit area, the more excellent the aforementioned effects become. Therefore, it is preferably 18 g/m$^2$ or less, and more preferably 16 g/m$^2$ or less. On the other hand, a mass per unit area that is too low tends to result in poor mechanical strength. Therefore, the mass per unit area is more preferably 3 g/m$^2$ or more, and most preferably 5 g/m$^2$ or more.

Similar to the first nonwoven fabric, the apparent density of the second nonwoven fabric of the present invention is preferably 0.35 g/cm$^3$ or less, more preferably 0.30 g/cm$^3$ or less, and most preferably 0.28 g/cm$^3$ or less to exhibit excellent permeability. To exhibit excellent mechanical strength, the apparent density is preferably 0.10 g/cm$^3$ or more, more preferably 0.15 g/cm$^3$ or more, and most preferably 0.20 g/cm$^3$ or more.

The second nonwoven fabric of the present invention contains the polymethylpentene component and exhibits excellent heat resistance, preferably with a shrinkage rate of 5% or less when heated at 150°C. The lower the shrinkage rate, the more excellent the heat resistance. Therefore, the shrinkage rate when heated at 150°C is more preferably 4.5% or less, and ideally 0%.

The second nonwoven fabric of the present invention is fused with the polyethylene component, contains the polymethylpentene component, has a high ratio of polyolefin-based resin components, and exhibits excellent chemical resistance. Since this configuration may be difficult to apply to various uses, various processing may be applied to facilitate application for various uses. For example, the second nonwoven fabric may be colored with pigments or dyes, electrically charged, patterned, or have hydrophilic groups such as a sulfonic acid group, a carboxyl group, and a carbonyl group introduced.

(Method for producing basic nonwoven fabric, first nonwoven fabric, or second nonwoven fabric)

The preferred basic nonwoven fabric, first nonwoven fabric, or second nonwoven fabric (collectively and sometimes referred to as "nonwoven fabric") of the present invention may be produced, for example, as follows.

First, fibers containing a polymethylpentene component and fibers containing a polyethylene component are prepared. As mentioned above, it is possible, and rather preferable to contain both the polymethylpentene component and the polyethylene component in the same fiber, like core-sheath composite fibers having a polyethylene component as the sheath component and a polymethylpentene component as the core component. As needed, the aforementioned orange-type composite fibers, multiple bimetal composite fibers, ultrafine fibers, high-strength fibers, heat-resistant fibers, and the like are prepared. As mentioned above, for the second nonwoven fabric, the core-sheath composite fibers having a polyethylene component as the sheath component and a polymethylpentene component as the core component are prepared. For the first nonwoven fabric, it is preferable to prepare similar core-sheath composite fibers.

Next, a fiber web is formed using the prepared fibers. In this case, taking into account that the polymethylpentene component accounts for 30% by volume or more of the total fibers, that the polyethylene component accounts for 30% by volume or more of the total fibers, and that the polyethylene component forms the fiber surface to involve in fusion bonding, the fibers are blended. When the ultrafine fibers are produced by applying a mechanical external force to the orange-type composite fibers or multiple bimetal-type composite fibers, the ultrafine fibers may be prepared by dividing the orange-type composite fibers or multiple bimetal-type composite fibers using, for example, a refiner, a pulper, a mixer, a beater, or the like, before forming the fiber web. Or, by extracting and removing the sea component from the islands-in-sea type composite fibers, ultrafine fibers composed of the island component may be prepared.

The method for forming the fiber web is not particularly limited, but it may be formed by, for example, dry methods such as an air-laid method and a carding method; wet methods such as a flat long-wire type, an inclined short-wire type, a cylindrical type, and a long-wire/cylindrical combination type; or direct methods such as a spunbond method, a melt-blown method, and an electrospinning method. Among these, the wet methods, which readily form a fiber web with excellent texture, are preferable.

Next, heat treatment of the fiber web may be performed to produce a nonwoven fabric by fusing fibers containing the polyethylene component. Furthermore, to enhance its mechanical strength, and/or to generate ultrafine fibers from composite fibers containing undivided orange-type composite fibers or multiple bimetal-type composite fibers as fibers constituting the fiber web, a water jet may be applied to the fiber web. Even when applying a water jet as in the latter case, a heat treatment is performed after applying the water jet to fuse the fibers containing the polyethylene component.

The heat treatment of the fiber web in the former case may be performed either under unpressurized conditions or under pressurized conditions, or the polyethylene component may be melted under unpressurized conditions, followed by pressurization, so long as the fibers containing the polyethylene component can be fused. Such heat treatment may be performed using, for example, a thermal calendar, a hot-air-through heat treatment machine, a cylinder-contact heat treatment machine, or the like. The heating temperature, when heating and pressurization are performed simultaneously, is preferably within the range from the softening temperature to the melting point of the polyethylene component. When pressure is not applied, it is preferable to perform the heat treatment within the range from the softening temperature of the polyethylene component to a temperature 30°C higher than its melting point.

The treatment of the fiber web with a water jet in the latter case varies depending on the type of fiber, and therefore, is not particularly limited, so long as the fibers are sufficiently entangled with each other, and furthermore, undivided orange-type composite fibers or multiple bimetal-type composite fibers can be divided into individual resin components to generate ultrafine fibers. For example, it can be performed by ejecting a water jet at a pressure of 1 MPa to 30 MPa onto the fiber web from a nozzle plate with nozzles that are arranged in one row or two or more rows and have diameters of 0.05 to 0.3 mm and pitches of 0.2 to 3 mm. This water jet treatment is performed one or more times on one or both sides of the fiber web. When a nonwoven fabric without apertures is produced, it is preferable to use, as a support body such as a net supporting the fiber web, a support with a thin non-aperture (wire diameter), for example, a support with a non-aperture (wire diameter) with a thickness of 0.25 mm or less. Conversely, when a nonwoven fabric with apertures is produced, it is preferable to use, as a support body such as a net supporting the fiber web, a support with a thick non-aperture (wire diameter), for example, a support with a non-aperture (wire diameter) with a thickness exceeding 0.25 mm.

When undivided orange-type composite fibers or multiple bimetal composite fibers are displaced by the action of the water jet, and as a result, the composite fibers are difficult to divide and ultrafine fibers are difficult to generate, the composite fibers may be fixed by fusing them with the polyethylene component before applying the water jet. Even when the composite fibers are fused and fixed in this manner, the action of water jet causes ultrafine fibers to generate while simultaneously disrupting the fusion bonding, allowing the fibers to become three-dimensionally entangled.

By applying a water jet to entangle the fibers in three dimensions, and in some cases by generating ultrafine fibers, followed by fusing them with fibers containing a polyethylene component (particularly core-sheath composite fibers), since the fibers fuse in a state where numerous entangled fiber contact points exist, nonwoven fabrics with excellent mechanical strength can be produced. Fusion bonding using fibers containing a polyethylene component can be performed under the aforementioned method and conditions.

To make the nonwoven fabric of the present invention suitable for various applications and to make it more easily adaptable, various post-processing steps can be performed. For example, coloring processes using pigments or dyes; charging processes such as corona discharge, plasma discharge, or charging via water; pattern application processes such as embossing with rollers or printing using printing resins; hydrophilicity imparting processes such as sulfonation treatment, fluorine gas treatment, vinyl monomer graft polymerization treatment, discharge treatment, surfactant treatment, hydrophilic resin imparting treatment; or the like can be performed.

(Applications of first nonwoven fabric and second nonwoven fabric of the present invention)

The first nonwoven fabric and the second nonwoven fabric of the present invention exhibit excellent heat resistance, mechanical strength, and permeability, making them versatile materials suitable for various applications. For example, they are suitable for use as membrane supports such as a separator support for batteries or a separator support for water electrolysis, or a separator for electrochemical elements.

The membrane support or separator for electrochemical elements of the present invention may be composed solely of the first nonwoven fabric or second nonwoven fabric of the present invention, or may include, for example, nonwoven fabrics other than the first nonwoven fabric or second nonwoven fabric of the present invention, woven fabrics, knitted fabrics, nets, or porous films. In this way, when materials other than the first nonwoven fabric or the second nonwoven fabric of the present invention are included, various effects such as a strength-enhancing effect, a separation effect, and the like may be sometimes further improved.

Batteries that can utilize the first nonwoven fabric or second nonwoven fabric of the present invention as a separator support include, for example, nickel-zinc batteries, metal-air batteries such as zinc or magnesium, and lithium-ion secondary batteries.

Separator supports for water electrolysis that can utilize the first nonwoven fabric or second nonwoven fabric of the present invention as a separator support include, for example, fluorinated or hydrocarbon-based proton exchange membranes (PEM) for PEM water electrolysis systems, anion exchange membranes (AEM) such as all-aromatic polymer-type membranes for AEM water electrolysis systems, polyester-based porous membranes or fluorinated membranes for alkaline water electrolysis systems, and electrolyte membranes such as yttria-stabilized zirconia for solid oxide electrolysis cells (SOEC).

Electrochemical elements in which the first nonwoven fabric or the second nonwoven fabric of the present invention can be applied as a separator include, for example, alkaline primary batteries such as alkaline manganese batteries, mercury batteries, silver oxide batteries, or air batteries; alkaline secondary batteries such as nickel-cadmium batteries, silver-zinc batteries, silver-cadmium batteries, nickel-zinc batteries, nickel-metal hydride batteries, and lead-acid batteries; lithium-ion secondary batteries; sodium-ion batteries; multivalent ion batteries such as magnesium, aluminum, calcium, and zinc; lithium-sulfur batteries; metal-air batteries such as lithium and zinc; lithium-ion capacitors; fluoride-ion batteries; and potassium-ion batteries.

Among these, as an example where the first nonwoven fabric or second nonwoven fabric of the present invention can be suitably used as a membrane support, a separator support for nickel-zinc batteries will be explained.

The first nonwoven fabric of the present invention exhibits excellent heat resistance, because the polymethylpentene component accounts for 30% by volume or more of total fibers constituting the first nonwoven fabric. Furthermore, the first nonwoven fabric of the present invention exhibits excellent mechanical strength, because the polyethylene component accounts for 30% by volume or more of the total fibers constituting the first nonwoven fabric, the polyethylene component is fused, and it has a direction with a tensile strength per mass per unit area of 2.0 N/5 cm-width or more. Furthermore, the first nonwoven fabric of the present invention exhibits excellent permeability, because its thickness is thin, with a thickness of 100 $\mu$m or less.

The second nonwoven fabric of the present invention exhibits excellent heat resistance, because the polymethylpentene component accounts for 30% by volume or more of total fibers constituting the second nonwoven fabric. Furthermore, the second nonwoven fabric of the present invention exhibits excellent mechanical strength, because the polyethylene component accounts for 30% by volume or more of the total fibers constituting the second nonwoven fabric; the polyethylene component is fused; and when the ratio (L/D) of core-sheath composite fibers is 350 or more, since the fiber length is longer compared to the fiber diameter, the core-sheath composite fibers tend to tangle easily with the fibers constituting the second nonwoven fabric; and further, when the fiber content is the same, due to the low number of fibers and the few points where fibers connect, the tensile strength is high. Furthermore, the second nonwoven fabric exhibits excellent permeability, because its thickness is thin, with a thickness of 100 $\mu$m or less.

Therefore, a slurry containing layered double hydroxide (LDH) and/or LDH-like compounds (collectively referred to as "LDH"), which are separator components for nickel-zinc batteries, may be applied to the first nonwoven fabric or the second nonwoven fabric, allowing the LDH to readily permeate throughout the internal voids of the first nonwoven fabric or the second nonwoven fabric, and by removing the dispersion medium of the LDH through heating, separators supporting the LDH by the first nonwoven fabric or the second nonwoven fabric can be produced. Since the first nonwoven fabric or the second nonwoven fabric exhibits excellent permeability, the LDH can be uniformly dispersed throughout the internal voids of the first nonwoven fabric or the second nonwoven fabric, and even when heated to remove the dispersion medium from the slurry, the first nonwoven fabric or the second nonwoven fabric is resistant to shrinkage and can maintain its shape, and therefore, separators capable of maintaining a state where the LDH is uniformly dispersed can be produced. The produced separator exhibits excellent mechanical strength, because the LDH as the separator components is supported by the first nonwoven fabric or the second nonwoven fabric with excellent mechanical strength.

When the first nonwoven fabric or the second nonwoven fabric contains ultrafine fibers having a fiber diameter of 4.5 $\mu$m or less, since each void in the first nonwoven fabric or the second nonwoven fabric can be small and of uniform size, the LDH can be more uniformly supported throughout the first nonwoven fabric or the second nonwoven fabric, and the path from one side of the separator to the other becomes complex and long, and therefore, it is characterized in that short circuits due to dendrites are unlikely to occur.

When the first nonwoven fabric or the second nonwoven fabric is used as a separator support for nickel-zinc batteries, the first nonwoven fabric or the second nonwoven fabric is preferably composed solely of polyolefin-based fibers made only of a polyolefin-based resin, so as to exhibit excellent alkali resistance. It is preferable that it is composed only of one type or two or more types of polyolefin-based fibers, for example, core-sheath composite fibers having a polyethylene component (particularly, high-density polyethylene component) as the sheath component and a polymethylpentene component as the core component; core-sheath composite fibers having a polyethylene component (particularly, high-density polyethylene component) as the sheath component and a polypropylene component as the core component; single-component fibers (ultrafine fibers or high-strength fibers) composed of polyethylene, polypropylene, or polymethylpentene; orange-type or multiple bimetal-type composite fibers composed of a polypropylene composition and a polymethylpentene composition; orange-type or multiple bimetal-type composite fibers composed of a polyethylene composition and a polymethylpentene composition; or the like.

As mentioned above, the first nonwoven fabric or the second nonwoven fabric of the present invention is preferably composed solely of polyolefin-based fibers, since it exhibits poor compatibility with a slurry containing LDH, and there is a tendency for LDH to be difficult to uniformly support throughout the first nonwoven fabric or second nonwoven fabric, it is preferable to introduce hydrophilic groups, such as a sulfonic acid group, a carboxyl group, and carbonyl group, to impart affinity with a dispersion medium of the slurry.

EXAMPLES

The present invention now will be further illustrated by, but is by no means limited to, the following Examples.

(Core-sheath composite fibers)

Core-sheath composite fibers (fiber diameter: 17 $\mu$m, fiber length: 10 mm, volume ratio between polymethylpentene component and high-density polyethylene component: 6:4, one core component was arranged concentrically) composed of a core component made of polymethylpentene (melting point: 235°C, density: 0.82 g/cm$^3$) and a sheath component made of high-density polyethylene (melting point: 130°C, density: 0.94 g/cm$^3$) were prepared.

(High-strength core-sheath composite fibers)

High-strength core-sheath composite fibers (fiber diameter: 10 $\mu$m, fiber length: 5 mm, Young's modulus: 45 cN/dtex, volume ratio between polypropylene component and high-density polyethylene component: 6:4, one core component was arranged concentrically) composed of a core component made of polypropylene (melting point: 168°C, density: 0.91 g/cm$^3$) and a sheath component made of high-density polyethylene (melting point: 135°C, density: 0.94 g/cm$^3$) and having a tensile strength of 6.5 cN/dtex were prepared.

(High-strength fibers)

High-strength fibers composed solely of a polypropylene component (tensile strength: 9.5 cN/dtex, melting point:

168°C, fiber diameter: 13 μm, fiber length: 10 mm, density: 0.91 g/cm³) were prepared.

(Orange-type composite fibers)

As shown in Figure 5, orange-type composite fibers (fineness: 1.7 dtex, fiber length: 5 mm, drawn) composed of polypropylene components [capable of generating eight polypropylene ultrafine fibers (symbol in Figure: 11, substantially trapezoidal shape, fineness: 0.11 dtex (fiber diameter: 3.8 μm), melting point: 160°C, density: 0.91 g/cm³)] and polymethylpentene components [capable of generating eight polymethylpentene ultrafine fibers (symbol in Figure: 12, substantially trapezoidal shape, fineness: 0.11 dtex (fiber diameter: 4.1 μm), melting point: 235°C, density: 0.82 g/cm³)] having an orange-type cross-sectional shape and a hollow portion (volume ratio between polypropylene component and polymethylpentene component: 6:4) were prepared.

(Ultrafine fibers)

Islands-in-sea type composite fibers (fineness: 1.65 dtex, fiber length: 2 mm) containing 25 island components made of polypropylene in a sea component made of copolymer polyester, produced by spinning using a composite spinning method, followed by drawing, were prepared.
Next, the island-in-sea type composite fibers were immersed in a bath (temperature: 80°C) containing a 10 mass% sodium hydroxide aqueous solution for 30 minutes to extract and remove copolymer polyester that was the sea component of the island-in-sea type composite fibers, to obtain ultrafine fibers composed of polypropylene (average fiber diameter: 2 μm, melting point: 172°C, fiber length: 2 mm, cross-sectional shape: circular, density: 0.91 g/cm³).

(Example 1-3 and Comparative Example 1-2)

After forming slurries mixed and dispersed according to the formulations shown in Table 1, fiber webs were formed using a wet method (flat long-wire type).
Next, these fiber webs were dried at 140°C without pressure, and simultaneously fused with the high-density polyethylene component of the core-sheath composite fibers (Examples 1-3 and Comparative Example 1) or the high-density polyethylene component of the high-strength core-sheath composite fibers (Comparative Example 2) to produce nonwoven fabrics.
Subsequently, the nonwoven fabrics were immersed in a fuming sulfuric acid solution (15% SO₃ solution) at 60°C for 2 minutes, thoroughly washed with water, and dried to introduce sulfonic acid groups onto the fiber surface. Furthermore, the thickness was adjusted using a room-temperature calendar to produce separators. The physical properties of these separators are shown in Table 1.

[Table 1]

| Items | | Unit | Example 1 | Example 2 | Example 3 | Comp. Ex. 1 | Comp. Ex. 2 |
|---|---|---|---|---|---|---|---|
| Fiber formulation | Core-sheath (CS) CF (*1) | % by volume | 100 | 85 | 60 | 50 | |
| | High-strength CS CF | | | | | | 90 |
| | High-strength fiber | | | | 20 | 30 | |
| | Ultrafine fiber | | | 15 | 20 | 20 | 10 |
| PMP ratio (*2) | | % by volume | 50 | 42.5 | 30 | 25 | 0 |
| High-density PE ratio (*3) | | % by volume | 50 | 42.5 | 30 | 25 | 36 |
| Surface treatment | | | Sulfonation | Sulfonation | Sulfonation | Sulfonation | Sulfonation |

(continued)

| Items | Unit | Example 1 | Example 2 | Example 3 | Comp. Ex. 1 | Comp. Ex. 2 |
|---|---|---|---|---|---|---|
| Mass per unit area (MPUA) | g/m$^2$ | 55.0 | 55.0 | 55.0 | 52.8 | 55.0 |
| Thickness | mm | 0.15 | 0.20 | 0.15 | 0.15 | 0.15 |
| Apparent density | g/cm$^3$ | 0.37 | 0.28 | 0.37 | 0.36 | 0.37 |
| Porosity | % | 58 | 69 | 60 | 59 | 60 |
| Tensile strength (TS) (*4) | N/50mm | 200 | 185 | 135 | 108 | 200 |
| TS/MPUA (*4) | N/50mm/(g/m$^2$) | 3.6 | 3.4 | 2.5 | 2.0 | 3.6 |
| Shrinkage rate at 150°C | % | 3.5 | 4.5 | 4.9 | 5.5 | 25.0 |
| Liquid retention rate (LRR) (*5) | % | 5.0 | 7.5 | 7.5 | 9.0 | 7.5 |

(*1) CF: composite fibers
(*2) PMP: polymethylpentene
(*3) PE: polyethylene
(*4) Production direction
(*5) LRR after being pressurized

The separators of Examples 1-3, in which both the polymethylpentene component and the polyethylene component accounted for 30% by volume or more of total fibers constituting the nonwoven fabric, exhibited excellent mechanical strength, with a tensile strength of 2.5 N/5 cm-width or more per mass per unit area in the production direction of the separator, and excellent heat resistance, with a shrinkage rate of 5% or less when heated at 150°C. On the other hand, the separator of Comparative Example 1, in which both the polymethylpentene component and the polyethylene component accounted for less than 30% by volume of total fibers constituting the nonwoven fabric, exhibited poor mechanical strength, with a tensile strength of less than 2.5 N/5 cm-width per mass per unit area in the production direction of the separator, and poor heat resistance, with a shrinkage rate of more than 5% when heated at 150°C.
The separator of Comparative Example 2, in which the polymethylpentene component accounted for less than 30% by volume of total fibers constituting the nonwoven fabric, exhibited excellent mechanical strength, with a tensile strength of 2.5 N/5 cm-width or more per mass per unit area in the production direction of the separator, but poor heat resistance, with a shrinkage rate of 25% when heated at 150°C.

(Example 4 and Comparative Example 3)

After forming slurries mixed and dispersed according to the formulations shown in Table 2, fiber webs were formed using a wet method (flat long-wire type).
Next, these fiber webs were dried at 140°C without pressure, and simultaneously fused with the high-density polyethylene component of the core-sheath composite fibers (Example 4) or the high-density polyethylene component of the high-strength core-sheath composite fibers (Comparative Example 3) to produce fused webs.
Next, these fused webs were placed on a net with a wire diameter of 0.15 mm, and a water jet with a pressure of 8 MPa was ejected alternately onto both sides twice from a nozzle plate with a nozzle diameter of 0.13 mm and a pitch of 0.6 mm to divide the orange-type composite fibers and perform a three-dimensional entanglement of fibers, to produce water jet-entangled webs.
Subsequently, these water jet-entangled webs were dried at 140°C without pressure, and simultaneously re-fused with the high-density polyethylene component of the core-sheath composite fibers or the high-strength core-sheath composite fibers to produce fused and entangled nonwoven fabrics.
Subsequently, the fused and entangled nonwoven fabrics were immersed in a fuming sulfuric acid solution (15% SO$_3$ solution) at 60°C for 2 minutes, thoroughly washed with water, and dried to introduce sulfonic acid groups onto the fiber surface. Furthermore, the thickness was adjusted using a room-temperature calendar to produce separators. The physical properties of these separators are shown in Table 2.

[Table 2]

| Items | | Unit | Example 4 | Comp. Ex. 3 |
|---|---|---|---|---|
| Fiber formulation | Core-sheath (CS) CF (*1) | % by volume | 60 | |
| | High-strength CS CF | | | 60 |
| | Orange-type CF | | 40 | 40 |
| PMP ratio (*2) | | % by volume | 46 | 16 |
| High-density PE ratio (*3) | | % by volume | 30 | 24 |
| Surface treatment | | | Sulfonation | Sulfonation |
| Mass per unit area (MPUA) | | g/m$^2$ | 55.0 | 65.0 |
| Thickness | | mm | 0.15 | 0.19 |
| Apparent density | | g/cm$^3$ | 0.37 | 0.34 |
| Porosity | | % | 60 | 62 |
| Tensile strength (TS) (*4) | | N/50mm | 140 | 200 |
| TS/MPUA (*4) | | N/50mm/(g/m$^2$) | 2.5 | 3.1 |
| Shrinkage rate at 150°C | | % | 4.0 | 20.0 |
| Liquid retention rate (LRR) (*5) | | % | 9.0 | 13.0 |
| (*1) CF: composite fibers<br>(*2) PMP: polymethylpentene<br>(*3) PE: polyethylene<br>(*4) Production direction<br>(*5) LRR after being pressurized | | | | |

The separator of Example 4, in which both the polymethylpentene component and the polyethylene component accounted for 30% by volume or more of total fibers constituting the nonwoven fabric, exhibited excellent mechanical strength, with a tensile strength of 2.5 N/5 cm-width or more per mass per unit area in the production direction of the separator, and excellent heat resistance, with a shrinkage rate of 5% or less when heated at 150°C. It can be used as a separator for electrochemical elements in high-temperature regions, and not only that, since it exhibited excellent liquid retention rate after being pressurized and excellent electrolyte retention properties, due to the ultrafine fibers generated from the orange-type composite fibers, it was a separator capable of producing electrochemical elements excellent in operation even in low-temperature regions.

On the other hand, the separator of Comparative Example 3, in which both the polymethylpentene component and the polyethylene component accounted for less than 30% by volume of total fibers constituting the nonwoven fabric, secured a tensile strength of 2.5 N/5 cm-width or more per mass per unit area in the production direction of the separator by water jet entanglement, but exhibited poor heat resistance, with a shrinkage rate of 20% when heated at 150°C.

(Core-sheath composite fibers A)

Core-sheath composite fibers A (fiber diameter: 17 μm, fiber length: 10 mm, ratio (L/D)= 588, volume ratio between polymethylpentene component and high-density polyethylene component: 6:4, one core component was arranged concentrically) composed of a core component made of polymethylpentene (melting point: 235°C, density: 0.82 g/cm$^3$) and a sheath component made of high-density polyethylene (melting point: 130°C, density: 0.94 g/cm$^3$) were prepared.

(Core-sheath composite fibers B)

Core-sheath composite fibers B having the same structure as core-sheath composite fibers A, except that its fiber length was shorter (5 mm length) than that of core-sheath composite fibers A were prepared (fiber diameter: 17 μm, fiber length: 5 mm, ratio (L/D)= 294, volume ratio between polymethylpentene component and high-density polyethylene component: 6:4, one core component was arranged concentrically).

(High-strength core-sheath composite fibers)

High-strength core-sheath composite fibers (fiber diameter: 10 $\mu$m, fiber length: 5 mm, ratio (L/D)= 500, volume ratio between polypropylene component and high-density polyethylene component: 6:4, one core component was arranged concentrically) composed of a core component made of polypropylene (melting point: 168°C, density: 0.91 g/cm$^3$) and a sheath component made of high-density polyethylene (melting point: 135°C, density: 0.94 g/cm$^3$) and having a tensile strength of 6.5 cN/dtex were prepared.

(Ultrafine fibers)

Islands-in-sea type composite fibers (fineness: 1.65 dtex, fiber length: 2 mm) containing 25 island components made of polypropylene in a sea component made of copolymer polyester, produced by spinning using a composite spinning method, followed by drawing, were prepared.

Next, the island-in-sea type composite fibers were immersed in a bath (temperature: 80°C) containing a 10 mass% sodium hydroxide aqueous solution for 30 minutes to extract and remove copolymer polyester that was the sea component of the island-in-sea type composite fibers, to obtain ultrafine fibers composed of polypropylene (average fiber diameter: 2 $\mu$m, melting point: 172°C, fiber length: 2 mm, ratio (L/D)= 1000, cross-sectional shape: circular, density: 0.91 g/cm$^3$).

(Heat-resistant fibers)

Heat-resistant fibers made of polyphenylene sulfide (PPS) were prepared (fiber diameter: 9.7 $\mu$m, fiber length: 6 mm, ratio (L/D)= 619).

(Examples 11-13 and Comparative Examples 11-15)

After forming slurries mixed and dispersed according to the formulations shown in Table 3, fiber webs were formed using a wet method (flat long-wire type).

Next, these fiber webs were dried at 140°C without pressure, and simultaneously fused with the high-density polyethylene component of the core-sheath composite fibers A or B (Examples 11-13 and Comparative Examples 11-14) or the high-density polyethylene component of the high-strength core-sheath composite fibers (Comparative Example 15) to produce first or second nonwoven fabrics.

Subsequently, each first nonwoven fabric or second nonwoven fabric 5 was sandwiched between dielectric materials 2a and 2b of the discharge treatment apparatus having a schematic cross-section as shown in Figure 7. At atmospheric pressure, in the presence of air (humidity: 60% RH), plasma treatment was performed. That is, an AC voltage was applied between the two electrodes 1a and 1b for 30 seconds (voltage: 0.1 kVp, output: 2.8 kW, output per unit area: 1.83 W/cm$^2$, frequency: 25 KHz, waveform: sine wave) to generate discharges within the first nonwoven fabric or second nonwoven fabric, thereby introducing hydrophilic groups such as carboxyl groups and carbonyl groups onto the fiber surface. Subsequently, the thickness was adjusted using a room-temperature calendar to produce supports. The physical properties of these supports are shown in Table 3.

The "electrical resistance" in Table 3 was evaluated using the following procedure:

(1) A mixture was prepared containing 28.5 mass% zirconium oxide, 1.5 mass% an acrylic binder, and 70 mass% pure water.

(2) A coating bar was operated with a gap of 50 $\mu$m from each of the first nonwoven fabric or the second nonwoven fabric to coat the mixture onto one side of the first nonwoven fabric or the second nonwoven fabric.

(3) The coated first nonwoven fabric or second nonwoven fabric was dried at 100°C for 10 minutes to produce an inorganic particle-coated first nonwoven fabric or second nonwoven fabric.

(4) Three samples (50 mm square) were taken from each inorganic particle-coated first nonwoven fabric or second nonwoven fabric, and the mass of each sample was measured.

(5) Each sample was immersed in a potassium hydroxide aqueous solution with a density of 1.3 g/cm$^3$ (temperature: 20°C), absorbing 80 mass% relative to the mass of each sample.

(6) Each absorbed sample was sandwiched between nickel plates (35 mm square), and the electrical resistance was measured for each when a current of 1 kHz and 1 mA was applied.

(7) The samples were evaluated as follows: "○" when the arithmetic mean of electrical resistances of the three samples was 0.4 $\Omega$ or less; "△" when it was higher than 0.4 $\Omega$ and 0.6 $\Omega$ or less; and "×" when it was higher than 0.6 $\Omega$.

[Table 3]

| Items | | Unit | Example 11 | Example 12 | Comp. Ex. 11 | Comp. Ex. 12 | Comp. Ex. 13 | Comp. Ex. 14 | Comp. Ex. 15 | Example 13 |
|---|---|---|---|---|---|---|---|---|---|---|
| Fiber formulation | Core-sheath (CS) CF A (L/D=588) (*1) | % by volume | 85 | 85 | 85 | 50 | | | | 65 |
| | CS CF B (L/D=294) | | | | | | 85 | 85 | | |
| | High-strength CS CF (L/D=500) | | | | | | | | 75 | |
| | Ultrafine fiber (L/D=1000) | | 15 | 15 | 15 | 50 | 15 | 15 | 25 | 5 |
| | PPS fiber (L/D=619) | | | | | | | | | 30 |
| PMP ratio (*2) | | % by volume | 42.5 | 42.5 | 42.5 | 25 | 42.5 | 42.5 | 0 | 32.5 |
| High-density PE ratio (*3) | | % by volume | 42.5 | 42.5 | 42.5 | 25 | 42.5 | 42.5 | 30 | 32.5 |
| Surface treatment | | | by plasma | by plasma | by plasma | by plasma | by plasma | by plasma | by plasma | by plasma |
| Mass per unit area (MPUA) | | g/m² | 14 | 11 | 28 | 14 | 18 | 14 | 13 | 14 |
| Thickness | | μm | 50 | 45 | 103 | 50 | 50 | 50 | 50 | 50 |
| Apparent density | | g/cm³ | 0.28 | 0.24 | 0.27 | 0.28 | 0.36 | 0.28 | 0.26 | 0.28 |
| Porosity | | % | 68 | 73 | 70 | 69 | 61 | 68 | 71 | 69 |
| Tensile strength (TS)(*4) | | N/50mm | 34 | 25 | 70 | 20 | 30 | 24 | 38 | 28 |
| Tensile strength (TS)(*5) | | N/50mm | 25 | 18 | 55 | 14 | 22 | 17 | 25 | 16 |
| TS/MPUA (*4) | | N/50mm/(g/m²) | 2.4 | 2.3 | 2.5 | 1.4 | 1.7 | 1.7 | 2.9 | 2.0 |
| Shrinkage rate at 150°C | | % | 4.5 | 4.5 | 4.5 | 10.0 | 4.5 | 4.5 | 25.0 | 2.0 |
| Electrical resistance | | | ○ | ○ | × | ○ | △ | ○ | ○ | ○ |

(*1) CF: composite fibers
(*2) PMP: polymethylpentene
(*3) PE: polyethylene
(*4) Production direction
(*5) Width direction

The supports of Examples 11-13, in which both the polymethylpentene component and the polyethylene component accounted for 30% by volume or more (32.5% by volume or 42.5% by volume) of total fibers constituting the first or second nonwoven fabric, or the supports of Examples 11-13, in which polymethylpentene/polyethylene core-sheath composite fibers having a ratio (L/D) of 350 or more were contained and both the polymethylpentene component and the polyethylene component accounted for 30% by volume or more (32.5% by volume or 42.5% by volume) of total fibers constituting the first or second nonwoven fabric, exhibited excellent mechanical strength, with a tensile strength of 2.0 N/5 cm-width or more (2.0-2.4 N/5 cm-width) per mass per unit area in the production direction of the support, and excellent heat resistance, with a shrinkage rate of 5% or less (4.5%, 2.0%) when heated at 150°C. Furthermore, for the supports of Examples 11-13, since the thickness of each support was thin, at 100 μm or less (45-50 μm), and the electrical resistance was low (0.4 Ω or less), they were capable of producing membranes in which zirconium oxide was supported throughout the internal voids of the support, and exhibited excellent permeability. In particular, the support containing polyphenylene sulfide fibers, which was a heat-resistant fiber, exhibited excellent heat resistance, with a shrinkage rate of 2.0% when heated at 150°C.

On the other hand, since the support of Comparative Example 11 with a thickness exceeding 100 μm (103 μm) exhibited high electrical resistance (over 0.6 Ω), only membranes in which zirconium oxide was unevenly distributed within the internal voids of the support could be produced, resulting in poor permeability.

The support of Comparative Example 12, in which both the polymethylpentene component and the polyethylene component accounted for less than 30% by volume (25% by volume) of total fibers constituting the first or second nonwoven fabric, exhibited not only poor mechanical strength, with a tensile strength of less than 2.0 N/5 cm-width (1.4 N/5 cm-width) per mass per unit area in the production direction of the support, but also poor heat resistance, with a shrinkage rate exceeding 5% (10.0%) when heated at 150°C.

The supports of Comparative Examples 13 and 14, in which the ratio (L/D) was less than 350 (294) and core-sheath composite fibers B composed of a core component made of polymethylpentene and a sheath component made of high-density polyethylene were contained, exhibits poor mechanical strength, with a tensile strength of less than 2.0 N/5 cm-width (1.7 N/5 cm-width) per mass per unit area in the production direction of the support.

Since the support of Comparative Example 13 exhibited slightly high electrical resistance (0.4-0.6 Ω) due to its slightly low porosity (61%), zirconium oxide tended to be unevenly distributed within the internal voids of the support, resulting in slightly poor permeability.

The support of Comparative Example 15, in which the polymethylpentene component accounted for less than 30% by volume (0% by volume) of total fibers constituting the first or second nonwoven fabric, exhibited poor heat resistance, with a shrinkage rate exceeding 5% (25.0%) when heated at 150°C.

INDUSTRIAL APPLICABILITY

The nonwoven fabric of the present invention exhibits both excellent heat resistance and mechanical strength, making it a versatile material suitable for various applications. For example, it is suitable for use as a separator for electrochemical elements, a separator support for batteries such as nickel-zinc batteries, or a separator support for water electrolysis.

As electrochemical elements, examples thereof include alkaline primary batteries such as alkaline manganese batteries, mercury batteries, silver oxide batteries, air batteries, and the like; alkaline secondary batteries such as nickel-cadmium batteries, silver-zinc batteries, silver-cadmium batteries, nickel-zinc batteries, nickel-metal hydride batteries, lead-acid batteries, and the like; lithium-ion secondary batteries; sodium-ion batteries; multivalent ion batteries such as magnesium, aluminum, calcium, zinc, and the like; lithium-sulfur batteries; metal-air batteries such as lithium, zinc, and the like; lithium-ion capacitors; fluoride-ion batteries; potassium-ion batteries; and the like. In particular, even when used as separators for alkaline secondary batteries such as nickel-cadmium batteries, nickel-metal hydride batteries, and the like, due to their excellent heat resistance and mechanical strength, alkaline secondary batteries that are suitable for use in automotive applications requiring heat resistance can be produced.

Another nonwoven fabric of the present invention exhibits excellent heat resistance, mechanical strength, and permeability, making it a versatile material suitable for various applications. For example, it is suitable for use as membrane supports such as a separator support for batteries or a separator support for water electrolysis, or a separator for electrochemical elements.

REFERENCE SIGNS LIST

1 Orange-type composite fibers
11 Polymethylpentene component or resin component other than polymethylpentene

**EP 4 733 459 A1**

12 Resin component other than polymethylpentene, or polymethylpentene component
1a, 1b Electrodes
2a, 2b Dielectrics
4 AC power supply
5 First or second nonwoven fabric

**Claims**

1. A nonwoven fabric comprising a polymethylpentene component and a polyethylene component, the polyethylene component being fused,
   wherein the polymethylpentene component accounts for 30% by volume or more of total fibers constituting the nonwoven fabric, and the polyethylene component accounts for 30% by volume or more of the total fibers constituting the nonwoven fabric.

2. The nonwoven fabric according to claim 1, wherein constituent fibers of the nonwoven fabric comprise core-sheath composite fibers having a polyethylene component as a sheath component and a polymethylpentene component as a core component.

3. The nonwoven fabric according to claim 2, further comprising ultrafine fibers with a fiber diameter of 4.5 μm or less as the constituent fibers of the nonwoven fabric.

4. The nonwoven fabric according to claim 1, having a direction with a tensile strength per mass per unit area of 2.5 N/5 cm-width or more.

5. The nonwoven fabric according to claim 1, wherein a porosity is 50-80%.

6. The nonwoven fabric according to claim 1, wherein a liquid retention rate after being pressurized at 5.7 MPa is 5% or more.

7. A separator for an electrochemical element, comprising the nonwoven fabric according to any one of claims 1 to 6.

8. A nonwoven fabric comprising a polymethylpentene component and a polyethylene component, the polyethylene component being fused,

   wherein the polymethylpentene component accounts for 30% by volume or more of total fibers constituting the nonwoven fabric, and the polyethylene component accounts for 30% by volume or more of the total fibers constituting the nonwoven fabric,
   wherein a thickness of the nonwoven fabric is 100 μm or less, and
   wherein the nonwoven fabric has a direction with a tensile strength per mass per unit area of 2.0 N/5 cm-width or more.

9. The nonwoven fabric according to claim 8, wherein constituent fibers of the nonwoven fabric comprise core-sheath composite fibers having a polyethylene component as a sheath component and a polymethylpentene component as a core component.

10. The nonwoven fabric according to claim 9, wherein a ratio (L/D) of a fiber diameter (D, unit: μm) to a length (L, unit: μm) of the core-sheath composite fiber is 350 or more.

11. The nonwoven fabric according to claim 8, wherein a porosity is 60% or more.

12. The nonwoven fabric according to claim 8, wherein a mass per unit area is 20 g/m$^2$ or less.

13. A nonwoven fabric comprising core-sheath composite fibers having a polyethylene component as a sheath component and a polymethylpentene component as a core component, the polyethylene component as the sheath component of the core-sheath composite fibers being fused,

   wherein the polymethylpentene component accounts for 30% by volume or more of total fibers constituting the nonwoven fabric, and the polyethylene component accounts for 30% by volume or more of the total fibers constituting the nonwoven fabric,

wherein a thickness of the nonwoven fabric is 100 μm or less, and

wherein a ratio (L/D) of a fiber diameter (D, unit: μm) to a length (L, unit: μm) of the core-sheath composite fiber is 350 or more.

14. The nonwoven fabric according to claim 13, having a direction with a tensile strength per mass per unit area of 2.0 N/5 cm-width or more.

15. The nonwoven fabric according to claim 13, wherein a porosity is 60% or more.

16. The nonwoven fabric according to claim 13, wherein a mass per unit area is 20 g/m$^2$ or less.

17. A membrane support, comprising the nonwoven fabric according to any one of claims 8 to 16.

[Figure 1]

[Figure 2]

[Figure 3]

[Figure 4]

[Figure 5]

[Figure 6]

[Figure 7]

Europäisches
Patentamt

European
Patent Office

Office européen
des brevets

# EUROPEAN SEARCH REPORT

**Application Number**

EP 25 20 9955

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2000 215876 A (DAIWA SPINNING CO LTD) 4 August 2000 (2000-08-04) * claim 1; example 1 * ----- | 1-16 | INV. D04H1/4291 D04H1/541 D04H1/732 B01D69/10 H01M50/44 |
| A,D | JP 2021 161563 A (DAIWABO HOLDINGS CO LTD; DAIWA SPINNING CO LTD) 11 October 2021 (2021-10-11) * claim 9; example 1 * ----- | 1-16 | |
| A,D | JP 2019 179678 A (NIPPON CATALYTIC CHEM IND) 17 October 2019 (2019-10-17) * paragraph [0130]; examples * ----- | 1-17 | |

| | TECHNICAL FIELDS SEARCHED (IPC) |
|---|---|
| | B01D D04H H01M |

The present search report has been drawn up for all claims

| Place of search | Date of completion of the search | Examiner |
|---|---|---|
| Munich | 10 February 2026 | Saunders, Thomas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 9955

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2026

| Patent document cited in search report | | Publication date | Patent family member(s) | | Publication date |
|---|---|---|---|---|---|
| JP 2000215876 | A | 04-08-2000 | JP | 3678081 B2 | 03-08-2005 |
| | | | JP | 2000215876 A | 04-08-2000 |
| JP 2021161563 | A | 11-10-2021 | JP | 7458228 B2 | 29-03-2024 |
| | | | JP | 2021161563 A | 11-10-2021 |
| JP 2019179678 | A | 17-10-2019 | JP | 7195751 B2 | 26-12-2022 |
| | | | JP | 2019179678 A | 17-10-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021161563 A

- JP 2019179678 A